# EUROPÄISCHE PATENTSCHRIFT

(11) **EP 3 279 018 B1**
(45) Veröffentlichungstag und Bekanntmachung des Hinweises auf die Patenterteilung: **30.09.2020**
(21) Anmeldenummer: 17181615.0
(22) Anmeldetag: 17.07.2017
(51) Int. Cl.: B60H 1/00, B60K 35/00

(54) **VERFAHREN UND BEDIENVORRICHTUNG ZUM BEDIENEN EINER KLIMATISIERUNGSVORRICHTUNG EINES FAHRZEUGS**
METHOD AND OPERATING DEVICE FOR OPERATING AN AIR CONDITIONING DEVICE OF A VEHICLE
PROCÉDÉ ET DISPOSITIF DE COMMANDE PERMETTANT DE COMMANDER UN DISPOSITIF DE CLIMATISATION D'UN VÉHICULE AUTOMOBILE

(30) Priorität: 03.08.2016 DE 102016114354
(43) Veröffentlichungstag der Anmeldung: 07.02.2018
(73) Patentinhaber: VOLKSWAGEN AKTIENGESELLSCHAFT, 38440 Wolfsburg (DE)
(72) Erfinder: CENGIL, Sükrü, 30938 Burgwedel (DE); BRAUN, Anna, 38114 Braunschweig (DE); HERDEY, Jan Peter, 38110 Braunschweig (DE)
(74) Vertreter: Reitstötter Kinzebach

(56) Entgegenhaltungen:
- EP-A1- 2 896 524
- EP-A2- 3 088 220
- DE-A1-102012 016 109

## Beschreibung

Die vorliegende Erfindung betrifft ein Verfahren und eine Bedienvorrichtung zum Bedienen einer Klimatisierungsvorrichtung eines Fahrzeugs, wobei die Klimatisierungsvorrichtung zumindest drei Anzeigemodi aufweist, nämlich einen Statusmodus, einen Übergangsmodus und einen Einstellmodus.

In einem Fahrzeug, insbesondere in einem Kraftfahrzeug, ist eine Vielzahl von Einrichtungen vorgesehen, welche die Sicherheit und den Komfort für die Fahrzeuginsassen während der Fahrt verbessern sollen. Dazu zählen beispielsweise Fahrerassistenzsysteme, Beleuchtungseinrichtungen für die äußere Umgebung oder den Innenraum des Fahrzeugs, Klimatisierungseinrichtungen oder multimediale Unterhaltungssysteme des Fahrzeugs. Mit zunehmender Anzahl und Komplexität der einzelnen Komponenten wächst die Herausforderung, für den Fahrer oder andere Fahrzeuginsassen die Bedienung dieser Einrichtungen möglichst einfach zu gestalten und Informationen über den Zustand des Systems im Fahrzeug leicht erfassbar auszugeben. In modernen Fahrzeugen werden daher vielfach Multifunktionsbediensysteme eingesetzt, welche eine oder mehrere Multifunktionsanzeigen und Bedienelemente umfassen, mit denen die vielfältigen im Fahrzeug enthaltenen Einrichtungen bedient und Informationen ausgegeben werden können. Die Bedienung wird dabei durch die auf der Multifunktionsanzeige wiedergegebenen Informationen unterstützt beziehungsweise geführt. Ferner kann über das Bediensystem ausgewählt werden, welche Informationen auf der Multifunktionsanzeige angezeigt werden sollen.

Eine Fahrzeugeinrichtung, die das Fahrerlebnis für die Fahrzeuginsassen wesentlich beeinflusst, ist die Belüftungseinrichtung. Die Luft in dem relativ kleinen Innenraumvolumen des Fahrzeugs ist anfällig für eine Belastung mit Gerüchen und Schadstoffen, insbesondere auch Partikeln aus der Umgebung des Fahrzeugs. Durch die bei der Fahrt vom Fahrzeug und anderen Verkehrsteilnehmern aufgewirbelte Luft können beispielsweise Staub, Pollen oder Schmutzpartikel im Straßenbereich verstärkt auftreten und durch geöffnete Fenster oder die Belüftungseinrichtung ins Fahrzeug gelangen. Ferner können Emissionen anderer Verkehrsteilnehmer dazu führen, dass unangenehme Gerüche und Schadstoffe ins Fahrzeug gelangen. Zur Verbesserung der Luftqualität im Fahrzeuginnenraum kann daher eine Vielzahl verschiedener Einrichtungen in einem modernen Fahrzeug verfügbar sein. Allerdings ist es bei den bestehenden Systemen für den Nutzer oft schwierig zu erkennen, in welchem gegenwärtigen Zustand sich das System befindet, wie weit die Veränderung der Luftqualität fortgeschritten ist und welche Einrichtungen aktiv sind. Ferner setzt die Bedienung einer Belüftungseinrichtung häufig mehrere oder komplizierte Schritte voraus.

Die DE 197 35 317 A1 beschreibt eine Fahrzeug-Heiz- oder Klimaanlage mit einem Bordmonitor, der eine Anzeige ausgibt zum Einstellen der zugeführten Luftmenge und Temperaturschichtung relativ zu definierten Zonen eines Fahrzeugpassagiers. Dabei werden Pfeile dargestellt, deren Länge einer bestimmten Luftmenge entspricht.

Die DE 10 2007 023 502 A1 beschreibt eine Anzeige- und Bedieneinheit für die Klimaanlage eines Fahrzeugs, wobei Personensymbole dargestellt werden, deren Kopf, Rumpf und Füße jeweils Klimazellen der einzelnen Fahrzeuginsassen symbolisieren. Ferner werden auf diese Klimazellen gerichtete Pfeile dargestellt. Anhand dieser Symbole können Einstellungen der Klimaanlage vorgenommen werden.

Bei der in der DE 10 2012 016 109 A1 beschriebenen Bedienvorrichtung zum Einstellen einer Klimatisierungsvorrichtung eines Fahrzeugs wird eine grafische Darstellung des Innenraums des Fahrzeugs angezeigt. Diese umfasst Schaltsymbole, welche die Einströmrichtung, -rate und/oder Temperatur der einströmenden Luft darstellen und an denen Eingaben vorgenommen werden können.

Die EP 2 896 524 A1 beschreibt ein Verfahren zum Einstellen einer Klimaanlage. Ein Passagier wird schematisch dargestellt und die auf verschiedene Körperregionen gerichteten Luftauslässe können jeweils eingestellt werden. Bei einer Annäherung an den Touchscreen erscheint ein "Anfasser", der anzeigt, dass eine Einstellung vorgenommen werden kann. Es erscheinen ferner Pfeile, welche die verschiedenen Luftströme symbolisieren und deren Länge durch eine Wischgeste eingestellt werden kann. Dabei erscheint zudem eine schriftliche Ausgabe der eingestellten Stufe des Gebläses.

Der vorliegenden Erfindung liegt daher die Aufgabe zugrunde, ein Verfahren und eine Bedienvorrichtung zum Bedienen einer Klimatisierungsvorrichtung eines Fahrzeugs bereitzustellen, die es dem Nutzer erlauben, auf besonders schnelle und einfache Weise Einstellungen vorzunehmen und umfassend Informationen über den Betrieb der Klimatisierungsvorrichtung zu erfassen.

Erfindungsgemäß wird diese Aufgabe durch ein Verfahren mit den Merkmalen des Anspruchs 1 und eine Bedienvorrichtung mit den Merkmalen des Anspruchs 11 gelöst. Vorteilhafte Ausgestaltungen und Weiterbildungen ergeben sich aus den abhängigen Ansprüchen.

Bei dem erfindungsgemäßen Verfahren der eingangs genannten Art wird ein aktueller Wert eines Einstellungsparameters der Klimatisierungsvorrichtung erfasst und es wird erfasst, ob eine Bedienabsicht eines Benutzers besteht. Wenn keine Bedienabsicht erfasst wird, wird der Statusmodus aktiviert. Wenn eine Bedienabsicht erfasst wird, wird der Übergangsmodus oder der Einstellmodus aktiviert. In Abhängigkeit von dem aktivierten Anzeigemodus werden Graphikdaten einer grafischen Darstellung eines Innenraums des Fahrzeugs so erzeugt und angezeigt, dass, wenn der Statusmodus aktiviert ist, die Darstellung des Innenraums ein Anzeigeelement umfasst, durch das der aktuell eingestellte Wert des Einstellparameters ausgegeben wird. Wenn der Übergangsmodus aktiviert ist, umfasst die Darstellung des Innenraums ein Einstellbarkeits-Anzeigeelement. Wenn der Einstellmodus aktiviert ist, umfasst die Darstellung des Innenraums ein bedienbares Einstellelement.

Indem die angezeigte Darstellung zum Bedienen der Klimatisierungsvorrichtung in Abhängigkeit von dem aktivierten Anzeigemodus gebildet wird, kann die Bedienung in vorteilhafter Weise an die jeweilige Bediensituation angepasst werden und der Nutzer kann zu jeder Zeit leicht erfassen, welche Bedienmöglichkeiten aktuell bestehen. Dazu wird berücksichtigt, ob eine Bedienabsicht des Benutzers erfasst wurde. Ferner erlaubt das erfindungsgemäße Verfahren, bei der Erfassung einer Bedienabsicht verschiedene Ausprägungen der Bedienabsicht zu unterscheiden und zu berücksichtigen. Insbesondere kann in Abhängigkeit von einer solchen Ausprägung der Bedienabsicht entweder der Übergangsmodus oder der Einstellmodus aktiviert werden. Ferner kann vorgesehen sein, dass je nach der Ausprägung der Bedienabsicht ausgehend von dem Statusmodus der Übergangsmodus und/oder ausgehend von dem Übergangsmodus der Einstellmodus aktiviert wird. Außerdem kann, wenn keine Bedienabsicht mehr erfasst wird, ausgehend von dem Einstellmodus oder von dem Übergangsmodus in den Statusmodus gewechselt werden.

Erfindungsgemäß sind das Anzeigeelement, das Einstellbarkeits-Anzeigeelement und das Einstellelement unterschiedlich voneinander ausgebildet. Dies erlaubt vorteilhafterweise eine besonders deutlich für einen Nutzer erkennbare Unterscheidung der verschiedenen Anzeigemodi.

Die Innenraumdarstellung umfasst dann in den verschiedenen Anzeigemodi das Anzeigeelement, das Einstellbarkeits-Anzeigeelement und/oder das Einstellelement, wobei diese Elemente in verschiedener Weise kombiniert oder separat von der Anzeige umfassen können. Erfindungsgemäß umfasst die Darstellung des Innenraums, wenn der Statusmodus aktiviert ist, lediglich das Anzeigeelement und weder das Einstellbarkeits-Anzeigeelement noch das Einstellelement; die Darstellung des Innenraums kann, wenn der Übergangsmodus aktiviert ist, lediglich das Einstellbarkeits-Anzeigeelement, gegebenenfalls in Kombination mit dem Anzeigeelement, umfassen; die Darstellung des Innenraums kann, wenn der Einstellmodus aktiviert ist, das Einstellelement umfassen, gegebenenfalls in Kombination mit dem Anzeigeelement und/oder dem Einstellbarkeits-Anzeigeelement.

Indem die Anzeige-, Einstellbarkeits-Anzeige- und Einstellelemente so ausgebildet werden, dass ein Nutzer die verschiedenen Modi der Anzeige unterscheiden kann, ist für den Nutzer stets klar erkennbar, wann eine Bedienung möglich ist und wie diese Bedienung erfolgen kann.

Bei dem erfindungsgemäßen Verfahren ist insbesondere vorgesehen, dass nach der Erfassung einer Bedienabsicht nicht nur bedienbare Elemente eingeblendet werden, sondern es sind zumindest drei verschiedene Anzeigemodi vorgesehen, die Abstufungen zwischen einer reinen Anzeige des aktuellen Status, eine Anzeige der Bedienbarkeit verschiedener Elemente und der Anzeige von bedienbaren Elementen einer Bedienoberfläche erlauben. Insbesondere ist aber vorgesehen, dass das bedienbare Einstellelement lediglich im Einstellmodus angezeigt wird und dass dabei weder das Anzeigeelement noch das Einstellbarkeits-Anzeigeelement bedienbar sind.

Beim Übergang zwischen verschiedenen Anzeigemodi kann eine Veränderung der Darstellung des Innenraums mittels einer Animation erfolgen, wobei insbesondere ein Übergang zwischen der Darstellung des Anzeigeelements, des Einstellbarkeits-Anzeigeelements und/oder des Einstellelements vorgenommen wird. Ferner kann vorgesehen sein, dass Grafikelemente nicht nur bei dem ihnen direkt zugeordneten Anzeigemodus dargestellt werden, sondern auch in einem anderen Anzeigemodus. Es können also Mischformen der Anzeigemodi gebildet werden. Zum Beispiel kann die Darstellung im Einstellmodus auch ein Anzeigeelement und/oder ein Einstellbarkeits-Anzeigeelement umfassen.

Die Erfassung des aktuellen Werts eines Einstellparameters der Klimatisierungsvorrichtung erfolgt auf an sich bekannte Weise. Beispielsweise kann dieser Wert eine Intensität, Temperatur, Richtung und/oder eine andere charakteristische Eigenschaft eines Luftstroms betreffen. Ferner kann der Wert eine stoffliche Zusammensetzung eines Luftstroms betreffen, das heißt beispielsweise eine Information über in der Luft enthaltene Partikel, Duftstoffe, Schadstoffe, eine Gaszusammensetzung oder ähnliche Parameter. Der Wert kann zudem das Öffnen und Schließen einer Lüftungsklappe betreffen, sowie Einstellungen einer weiteren Funktion zur Klimatisierung. Der erfasste Wert kann zum Beispiel von einer Einrichtung des Fahrzeugs bereitgestellt werden, insbesondere von der Klimatisierungsvorrichtung, oder die Erfassung kann mittels Sensoren erfolgen. Der aktuelle Wert kann dabei auf verschiedene, an sich bekannte Weisen vorgegeben sein, zum Beispiel als vorgegebener Ausgangswert oder durch eine zuvor vorgenommene Einstellung.

Die Erfassung der Bedienabsicht kann ebenfalls auf unterschiedliche, an sich bekannte Weisen erfolgen. Insbesondere kann eine Geste des Benutzers erfasst werden, aus der auf eine bevorstehende Bedienhandlung geschlossen werden kann. Dazu kann etwa ein Eintritt in einen Detektionsbereich oder eine Berührung einer Oberfläche erfasst werden, es kann eine erste Bedienhandlung als vorbereitendes Signalisieren einer Bedienabsicht erfasst werden, zum Beispiel eine vorbereitende Geste in dem Detektionsbereich oder auf einer berührungsempfindlichen Oberfläche, oder es kann anhand weiterer Daten von Einrichtungen des Fahrzeugs erkannt werden, dass eine Bedienabsicht vorliegt, beispielsweise bei einem mittels einer Sprachsteuerung erfassten bestimmten Befehl. Insbesondere kann dabei vorgesehen sein, dass die Bedienabsicht in zumindest zwei Ausprägungen, zum Beispiel anhand unterschiedlicher Kriterien, erfasst werden kann und dass den verschieden ausgeprägten Bedienabsichten unterschiedliche Anzeigemodi, insbesondere der Übergangsmodus oder der Einstellmodus, zugeordnet sind. Die Aktivierung des Übergangsmodus oder des Einstellmodus erfolgt in diesem Fall in Abhängigkeit von der erfassten Bedienabsicht beziehungsweise der Ausprägung der erfassten Bedienabsicht.

Der Statusmodus, der aktiviert ist, wenn keine Bedienabsicht erfasst wird, dient insbesondere der umfassenden und schnellen Information des Benutzers, insbesondere betreffend die aktuellen Einstellungen der Klimatisierungsvorrichtung. Das dazu vorgesehene Anzeigeelement der Darstellung des Fahrzeuginnenraums dient in diesem Fall der Ausgabe des aktuell eingestellten Wertes des Einstellparameters. Insbesondere können mehrere Anzeigeelemente vorgesehen sein, die unterschiedlichen Einstellungsparametern zugeordnet sind. Die Ausgabe des aktuell eingestellten Wertes kann dabei auf an sich bekannte Weise erfolgen, zum Beispiel mittels eines Symbols, einer Skala, eines Zahlen- oder Textelementes.

Der Übergangsmodus dient in erster Linie dazu, den Benutzer darüber zu informieren, welche Einstellmöglichkeiten ihm potentiell zur Verfügung stehen. Dazu umfasst die Darstellung des Innenraums ein Einstellbarkeits-Anzeigeelement, das insbesondere geeignet ist, dem Benutzer leicht erfassbar anzuzeigen, welche Einstellmöglichkeiten ihm zur Verfügung stehen. Das Einstellbarkeits-Anzeigeelement kann insbesondere zusätzlich zu dem Anzeigeelement dargestellt werden oder es kann eine animierte Darstellung so erzeugt werden, dass das Anzeigeelement in das Einstellbarkeits-Anzeigeelement übergeht beziehungsweise "sich verwandelt".

Dabei ist insbesondere vorgesehen, dass mittels des Einstellbarkeits-Anzeigeelements keine Einstellungen vorgenommen werden können. Die Anzeige der Einstellmöglichkeiten durch das Einstellbarkeits-Anzeigeelement kann zum Beispiel durch eine Hervorhebung eines grafischen Elementes, ein Hinzufügen oder Wegnehmen dargestellter Elemente und/oder durch eine weitere Anpassung der Darstellung gegenüber dem Statusmodus erfolgen. Beispielsweise kann das Anzeigeelement durch das Einstellbarkeits-Anzeigeelement ersetzt werden oder beide Elemente können gleichzeitig angezeigt werden.

Im Einstellmodus schließlich kann der Benutzer eine Bedienhandlung anhand eines bedienbaren Einstellelements vornehmen. Insbesondere wird dadurch der Wert eines dem Einstellelement zugeordneten Einstellparameters verändert. Das Einstellelement kann insbesondere auf an sich bekannte Weise als Element einer grafischen Bedienoberfläche gebildet werden und dabei in der Darstellung insbesondere das zuvor angezeigte Anzeigeelement und/oder Einstellbarkeits-Anzeigeelement ersetzen oder zusätzlich dazu angezeigt werden. Auch hier kann ein animierter Übergang ausgegeben werden, bei dem das Einstellbarkeits-Anzeigeelement in das Einstellelement übergeht. Die Darstellung erfolgt im Einstellmodus, insbesondere nach Art einer grafischen Bedienoberfläche.

Indem das Anzeigeelement, das Einstellbarkeits-Anzeigeelement und das Einstellelement unterschiedlich voneinander ausgebildet werden, kann der Nutzer drei Stufen erkennen, in denen er zu einer Eingabe gelangt: Vor dem Erfassen einer Bedienabsicht wird der aktuell eingestellte Wert des Einstellparameters ausgegeben. Nachdem eine Bedienabsicht erfasst wurde, wird durch ein Einstellbarkeits-Anzeigeelement angezeigt, welche Elemente der Darstellung bedienbar sein werden, insbesondere welche Werte von Parametern in welchen Bereichen der grafischen Bedienoberfläche eingestellt werden können, wenn der Einstellmodus aktiviert wird. Beispielsweise kann das Einstellbarkeits-Anzeigeelement innerhalb der Anzeige einer einstellbaren Einrichtung und/oder einem einstellbaren Parameter der Klimatisierungsvorrichtung zugeordnet sein.

Gemäß einer Ausgestaltung des erfindungsgemäßen Verfahrens wird, wenn der Einstellmodus aktiviert ist, anhand des Einstellelements eine Eingabe erfasst und anhand der Eingabe ein Steuersignal für die Klimatisierungsvorrichtung erzeugt. Dabei wird anhand des Steuersignals ein Belüftungselement der Klimatisierungsvorrichtung eingestellt.

Die Erfassung der Eingabe erfolgt dabei auf an sich bekannte Weise, insbesondere durch für grafische Bedienoberflächen bekannte Verfahren. Beispielsweise kann eine Eingabe mittels einer berührungsempfindlichen Oberfläche erfasst werden. Ferner kann eine Bedienung mittels eines Dreh-Drück-Stellers, eines Touchpad, einer Maus oder eines anderen Eingabegerätes erfolgen. Es können ferner Gesten des Benutzers im Raum sowie Sprachbefehle erfasst werden.

Die Erfassung der Eingabe erfolgt insbesondere anhand des Einstellelements, das im Einstellmodus angezeigt wird. Zum Beispiel kann die Eingabe des Nutzers durch das Einstellelement in der Weise unterstützt werden, dass eine Rotation oder Translation des Einstellelements vorgenommen oder zumindest angedeutet wird. Ferner kann eine weitere Änderung der Darstellung des Einstellelements die Eingabe unterstützen.

Insbesondere wird durch die Eingabe der aktuell eingestellte Wert des dem Einstellelement zugeordneten Einstellparameters verändert. Dieser bezieht sich insbesondere auf ein Belüftungselement der Klimatisierungsvorrichtung. Dabei können insbesondere mehrere Belüftungselemente mit mehreren Einstellungsparametern vorgesehen sein sowie mehrere Einstellungsparameter für das gleiche Belüftungselement oder eine Gruppe von Belüftungselementen. Durch die Steuerung der Belüftungselemente wird vorteilhafterweise eine besondere wichtige Komponente der Klimatisierungsvorrichtung eingestellt.

Das Steuersignal kann zum Beispiel einen Wert eines Einstellungsparameters verändern, beispielsweise eine Temperatur, eine Intensität und/oder eine Richtung eines durch das Belüftungselement erzeugten Luftstroms. Alternativ oder zusätzlich kann ein Parameter für eine Einrichtung zur Filterung oder Beduftung der Luft oder zur anderweitigen Veränderung der stofflichen Zusammensetzung der Luft eingestellt werden.

Gemäß einer Ausbildung werden anhand des Steuersignals ein geöffneter Zustand und ein geschlossener Zustand des Belüftungselements eingestellt. Dadurch kann vorteilhafterweise ein grundlegender Parameter des Belüftungselements eingestellt werden.

Insbesondere in Umgebungen mit stark verschmutzter Umgebungsluft ist es von Bedeutung, dass das Eindringen von Luft aus dem Außenraum in das Fahrzeug kontrolliert oder vermieden werden kann. Es ist dafür besonders wünschenswert, den geöffneten oder geschlossenen Zustand des Belüftungselements steuern zu können. Insbesondere kann vorgesehen sein, dass Lüftungsklappen, durch welche eine Verbindung von dem Außenraum in den Innenraum des Fahrzeugs besteht, geöffnet und geschlossen werden können. Dies ist in vielen Fällen unabhängig von der allgemeinen Tätigkeit der Klimatisierungsvorrichtung möglich, das heißt, auch bei an sich deaktivierter Belüftung kann eine Lüftungsklappe geöffnet sein. Durch das erfindungsgemäße Verfahren kann nun vorgesehen sein, dass der Benutzer die Lüftungsklappe öffnen oder schließen kann, je nach den Anforderungen der jeweiligen Situation und seinen Wünschen.

Gemäß einer weiteren Ausbildung wird, wenn der Statusmodus aktiviert ist, das Anzeigeelement so gebildet, dass der geöffnete oder geschlossene Zustand des Belüftungselements ausgegeben wird. Dadurch kann der Benutzer vorteilhafterweise schnell und einfach erkennen, welcher Zustand des Belüftungselements aktuell vorliegt.

Beispielsweise können verschiedene Symbole vorgesehen sein, welche die verschiedenen Zustände darstellen. Zum Beispiel kann eine Linie dargestellt werden, wenn sich das Belüftungselement im geschlossenen Zustand befindet, und ein Pfeil, eine Pfeilspitze oder eine pfeilähnliche Form, wenn die Lüftungsklappe geöffnet ist. In diesem Fall kann insbesondere symbolisiert werden, dass ein Luftstrom durch die Lüftungsklappe im geöffneten Zustand möglich ist.

Gemäß einer Weiterbildung sind das Anzeigeelement, das Einstellelement und das Einstellbarkeits-Anzeigeelement jeweils an einer Position der Darstellung angeordnet, welche der tatsächlichen Position des Belüftungselements in dem Fahrzeug entspricht. Dadurch kann der Benutzer vorteilhafterweise besonders schnell und intuitiv erfassen, auf welches Belüftungselement sich die jeweiligen Elemente der Darstellung beziehen.

Insbesondere kann die Position des Anzeigeelements, des Einstellelements und/oder des Einstellbarkeits-Anzeigeelements dabei so gewählt werden, dass der Benutzer durch einen Vergleich der Darstellung des Fahrzeuginnenraums mit dem tatsächlichen Innenraum die jeweils einstellbaren beziehungsweise angezeigten Belüftungselemente identifizieren kann.

Die den Belüftungselementen zugeordneten Elemente der Darstellung können dabei insbesondere angrenzend an den jeweiligen Bereich der Belüftungselemente dargestellt werden. Sie können ferner die Position des jeweils zugeordneten Lüftungselements überlagern und/oder in einer direkten Umgebung angezeigt werden.

Die Darstellung des Fahrzeuginnenraums kann ferner die Belüftungselemente selbst umfassen, beispielsweise durch Symbole und/oder eine Darstellung der Belüftungselemente in mehr oder weniger stark abstrahierter Form.

Gemäß einer Ausbildung wird der Wert des Einstellparameters durch das Anzeigeelement anhand einer Farbe und/oder einer Längserstreckung ausgegeben. Dadurch kann der Benutzer vorteilhafterweise den Wert besonders schnell und intuitiv erfassen.

Insbesondere kann dabei eine Proportionalität zwischen der Längserstreckung und dem Wert des Einstellparameters bestehen, wobei keine strenge, direkte Proportionalität bestehen muss. Ferner kann eine Farbskala verwendet werden, wobei durch verschiedene Farben verschiedene Werte dargestellt werden. Zum Beispiel kann eine Temperatur mittels einer Farbskala dargestellt werden, wobei blau für kalt und rot für warm steht. Dabei können farbliche Übergänge zur Darstellung von Zwischenwerten verwendet werden. Ferner kann beispielsweise eine Längserstreckung anhand eines Pfeils mit einer bestimmten Länge dargestellt werden. Dabei kann insbesondere eine größere Länge einen Luftstrom höherer Intensität darstellen. Ferner kann eine Breitenerstreckung und/oder eine Richtung verwendet werden, um eine räumliche Verteilung darzustellen.

In analoger Weise kann auch die Darstellung des Einstellbarkeits-Anzeigeelements und/oder des Einstellelements erfolgen. Ferner kann der geöffnete und geschlossene Zustand eines Belüftungselements wie beschrieben angezeigt werden.

Gemäß einer weiteren Ausbildung wird der Übergangsmodus aktiviert, wenn die erfasste Bedienabsicht eine Annäherung eines Betätigungsobjekts innerhalb eines Detektionsraums umfasst. Dadurch kann vorteilhafterweise die Bedienabsicht erfasst werden, wenn sich der Benutzer mit dem Betätigungsobjekt in einem bestimmten Bereich bewegt.

Insbesondere kann vorgesehen sein, dass der Detektionsraum sich in einer Umgebung einer Eingabeeinheit befindet, beispielsweise im Bereich einer berührungsempfindlichen Oberfläche, zum Beispiel eines Touchscreens. In diesem Fall kann der Übergangsmodus aktiviert werden, wenn der Benutzer das Betätigungsobjekt in die Nähe der berührungsempfindlichen Oberfläche bringt.

Es kann vorgesehen sein, dass der Einstellmodus aktiviert wird, wenn die erfasste Bedienabsicht eine Berührung einer Oberfläche umfasst. Ferner kann der Einstellmodus aktiviert werden, wenn die Berührung in einem bestimmten Bereich der Oberfläche erfolgt. Insbesondere kann in diesem Fall der Übergangsmodus aktiviert werden, wenn das Betätigungsobjekt sich der Oberfläche nähert, und der Einstellmodus aktiviert werden, wenn das Betätigungsobjekt die Oberfläche erreicht und berührt, gegebenenfalls in einem bestimmten Bereich und/oder mit einem bestimmten Druck.

Als "Betätigungsobjekt" werden dabei Mittel verstanden, die zum Ausführen einer Bedienhandlung verwendet werden. Das Betätigungsobjekt kann insbesondere ein Finger oder eine Hand des Benutzers sein.

Der Detektionsbereich kann auf unterschiedliche Weise bestimmt sein, wobei insbesondere vorgesehen ist, dass das Vornehmen einer Bedienhandlung typischerweise ein Eintreten in den Detektionsbereich voraussetzt. Die Erfassung des Eintretens in den Detektionsbereich kann dabei auf an sich bekannte Weise erfolgen, insbesondere mittels einer Annäherungssensorik. Diese kann beispielsweise eine Reflektionslichtschranke umfassen, die mindestens ein Leuchtmittel zum Emittieren elektromagnetischer Detektionsstrahlung in den Detektionsbereich und ein Empfangselement zum Detektieren eines an das Betätigungsobjekt gestreuten und/oder reflektierten Anteils der Detektionsstrahlung umfassen. Sie kann insbesondere so ausgebildet sein, dass das Betätigungsobjekt in dem Detektionsbereich anhand der Intensität der empfangenen Detektionsstrahlung erkannt wird. Die Annäherungssensorik kann ferner verschiedene Leuchtmittel für die verschiedenen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen werden, sodass sich die Detektionsstrahlung, die in die einzelnen Detektionszonen emittiert wird, jeweils hinsichtlich ihrer Modulation unterscheiden. In diesem Fall kann die Annäherungssensorik auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde. Auf diese Weise kann insbesondere eine ortsaufgelöste Annäherungssensorik bereitgestellt werden.

Bei einer Ausbildung der Erfindung ist vorgesehen, dass der Übergangsmodus aktiviert wird, wenn ein Eintritt eines Betätigungsobjekts in einen Detektionsraum vor einer berührungsempfindlichen Oberfläche eines Touchscreens erfasst wird, und der Einstellmodus aktiviert wird, wenn eine Berührung der berührungsempfindlichen Oberfläche durch das Betätigungsobjekt erfasst wird. Insbesondere wird, wenn das Betätigungsobjekt sich nicht in einem Detektionsraum befindet und die berührungsempfindliche Oberfläche nicht berührt, der Statusmodus aktiviert. Durch diese Abfolge von Schritten, bei denen jeweils unterschiedlicher Anzeigemodi aktiviert werden, wird vorteilhafterweise der typische Ablauf einer Bedienung mittels einer grafischen Bedienoberfläche in mehreren Schritten verdeutlicht.

Gemäß einer Weiterbildung wird, wenn der Übergangsmodus aktiviert ist, das Einstellbarkeits-Anzeigeelement zusammen mit dem Anzeigeelement dargestellt, wobei das Einstellbarkeits-Anzeigeelement an dem Anzeigeelement angeordnet ist. Dadurch kann vorteilhafterweise die Einstellbarkeit eines Einstellungsparameters besonders leicht erfassbar dargestellt werden.

Insbesondere kann dabei das Einstellbarkeits-Anzeigeelement so gebildet werden, dass seine Zuordnung zu dem Anzeigeelement deutlich signalisiert wird. Zum Beispiel kann, wenn das Anzeigeelement eine Pfeilform umfasst, das Einstellbarkeits-Anzeigeelement so gebildet werden, dass es ebenfalls ganz oder teilweise einer Pfeilform folgt.

Dabei ist das Einstellbarkeits-Anzeigeelement selbst noch nicht bedienbar, sondern signalisiert lediglich die Möglichkeit, durch eine Bedienhandlung eine Einstellung eines zugeordneten Einstellungsparameters vorzunehmen, allerdings erst nach Aktivierung des Einstellmodus.

Gemäß einer Ausbildung wird der Einstellmodus aktiviert, wenn die Bedienabsicht eine Betätigungshandlung umfasst. Dadurch kann eine besonders klare Trennung zwischen dem Übergangsmodus und dem Einstellmodus erreicht werden.

Die Betätigungshandlung kann dabei auf unterschiedliche, an sich bekannte Weisen erfasst werden. Sie stellt insbesondere einen Bezug zu einem im Übergangsmodus angezeigten Einstellbarkeits-Anzeigeelement her, beispielsweise durch eine räumliche Zuordnung zur Position der Anzeige des Einstellbarkeits-Anzeigeelements innerhalb der Darstellung. Die Betätigungshandlung zur Aktivierung des Einstellmodus kann zum Beispiel ein Antippen eines Touchscreens im Bereich eines im Übergangsmodus angezeigten Einstellbarkeits-Anzeigeelements umfassen, einen Tastendruck, eine Geste oder eine Spracheingabe, ferner können weitere Betätigungshandlungen vorgesehen sein.

Gemäß einer weiteren Ausbildung wird, wenn der Einstellmodus aktiviert ist, eine Annäherungsposition eines Betätigungsobjekts relativ zu der Darstellung des Innenraums bestimmt und das bedienbare Einstellelement anhand der Annäherungsposition gebildet. Dadurch kann vorteilhafterweise die Darstellung im Einstellmodus so erfolgen, dass der Benutzer gleich erkennen kann, welche Einstellungen an welchen Positionen der Darstellung des Innenraums möglich sind.

Insbesondere wird hierfür eine ortsaufgelöste Annäherungssensorik verwendet, wobei die Ortsauflösung es insbesondere erlaubt, eine Annäherung innerhalb bestimmter Bereiche der Darstellung zu detektieren. Zum Beispiel kann detektiert werden, wenn sich der Benutzer an ein bestimmtes Einstellelement annähert. Ferner kann detektiert werden, wenn der Benutzer sich an eine bestimmte Position der Innenraumdarstellung annähert, welcher ein bestimmtes Element der Klimatisierungsvorrichtung, insbesondere ein Belüftungselement, zugeordnet ist.

Das Einstellelement kann dabei nach an sich bekannter Art gebildet werden. Insbesondere ist vorgesehen, dass sich das dargestellte Einstellelement unterscheidet, je nachdem, ob eine Annäherung des Betätigungsobjekts an eine bestimmte Position detektiert wurde, oder nicht. Insbesondere kann vorgesehen sein, dass sich die Darstellung eines Einstellelements ändert, wenn das Betätigungsobjekt in einen bestimmten Bereich in einer Umgebung des dargestellten Einstellelements eintritt. Die Veränderung der Darstellung des Einstellelements kann dabei auf verschiedene Art und Weise erfolgen, beispielsweise durch eine Veränderung der Farbe und/oder Form des Einstellelements und/oder andere Hervorhebungen. Ferner kann ein dynamischer Effekt vorgesehen sein, wobei eine zeitlich veränderliche Darstellung erzeugt wird.

Ferner kann vorgesehen sein, dass in Abhängigkeit von der Annäherungsposition eine Einstellung eines bestimmten Einstellparameters vorgenommen werden kann. Dies kann insbesondere dann vorgesehen sein, wenn mehrere Werte von Einstellparametern verändert werden können und anhand der Annäherungsposition bestimmt wird, welchen der Einstellungsparameter der Benutzer vermutlich einstellen will.

Bei einer Ausbildung kann das Einstellelement in einem bestimmten Bereich eines Touchscreens angezeigt werden, wenn erfasst wird, dass das Betätigungsobjekt sich an diesen Bereich annähert oder diesen Bereich des Touchscreens berührt. Gleichzeitig kann in diesem Fall das Anzeigeelement und/oder das Einstellbarkeits-Anzeigeelement in einem weiteren Bereich des Touchscreens angezeigt werden, während kein Einstellelement in diesem weiteren Bereich angezeigt wird.

Insbesondere kann damit der Einstellmodus auf den bestimmten Bereich des Touchscreens beschränkt werden, während in dem weiteren Bereich, für den keine Bedienabsicht, insbesondere keine Annährung oder Berührung, erfasst wurde, der Übergangsmodus oder der Statusmodus aktiviert wird.

Zum Beispiel kann erfasst werden, dass ein Betätigungsobjekt in einen Detektionsraum vor einer berührungsempfindlichen Oberfläche eines Touchscreens eintritt, und der Übergangsmodus kann für den gesamten Touchscreen aktiviert werden. Anschließend kann eine weitere Ausprägung einer Bedienabsicht, insbesondere eine Berührung oder eine nähere Annäherung an die Oberfläche, erfasst werden und in einem Bereich um das Betätigungsobjekt der Einstellmodus aktiviert werden. In diesem Fall wird oder werden ein oder mehrere in dem Bereich um das Betätigungsobjekt herum angeordnete bedienbare Einstellobjekte angezeigt, während in weiteren Bereichen des Touchscreens lediglich die Einstellbarkeits-Anzeigeelemente, jedoch keine Einstellelemente, angezeigt werden können.

Erfindungsgemäß umfasst das Einstellelement ein Skalenobjekt und ein Zeigerobjekt, wobei zum Bedienen des Einstellelements eine Verschiebung des Zeigerobjekts relativ zu einer Erstreckungsrichtung des Skalenobjekts erfasst wird. Dies ermöglicht vorteilhafterweise eine besonders einfache und genaue Einstellung eines Wertes des Einstellungsparameters.

Die Erfassung eines Wertes anhand einer Verschiebung eines Zeigerobjekts relativ zur Erstreckungsrichtung eines Skalenobjekts ist an sich bekannt, wobei jedoch die genaue Anordnung und Ausbildung, sowohl des Skalenobjekts als auch des Zeigerobjekts, variabel sein können.

Insbesondere kann vorgesehen sein, dass das Skalenobjekt eine Pfeildarstellung umfasst. Dadurch kann vorteilhafterweise eine besonders einfache Einstellung einer Intensität vorgenommen werden.

Insbesondere kann auf die beschriebene Weise anhand einer Position des Zeigerobjekts relativ zu der Erstreckungsrichtung besonders einfach erkannt werden, welchen Wert der Einstellungsparameter annimmt. Dabei kann insbesondere vorgesehen sein, dass ein proportionaler Zusammenhang besteht zwischen der Position des Zeigerobjekts und der Erstreckung des Skalenobjekts. Insbesondere ist die Erstreckungsrichtung des Skalenobjekts eine Längserstreckung, wobei das Skalenobjekt eine längliche Form aufweist.

Für den Fall, dass das Skalenobjekt eine Pfeildarstellung umfasst, kann das Zeigerobjekt beispielsweise eine Pfeilspitze oder eine anders ausgebildete Pfeilform aufweisen. Das Zeigerobjekt kann ferner eine Linie aufweisen, wobei beispielsweise durch eine Darstellung von Linien beziehungsweise Pfeilformen ein Unterschied zwischen verschiedenen Zuständen des zugeordneten Einstellungsparameters, beispielsweise verschiedene Zustände eines Belüftungselements, dargestellt werden können.

Zum Bedienen des Einstellelements kann beispielsweise eine Wischgeste verwendet werden, wobei etwa bei einem Touchscreen eine bestimmte Position berührt wird, daraufhin eine Wischgeste ausgeführt wird, und die Berührung anschließend bei einer Endposition beendet wird. Anhand der Wischgeste, das heißt insbesondere der Anfangs- und Endposition, der Bewegungsrichtung sowie der Bewegungsgeschwindigkeit, kann die Eingabe bestimmt werden. Ferner kann die Bedienung des Einstellelements eine Betätigung eines Drehreglers, eines Schiebereglers und/oder weiterer analog oder digital ausgeführter Bedienelemente umfassen. Ferner kann eine Pfeildarstellung so ausgebildet sein, dass etwa anhand einer Gestaltung der Fläche beispielsweise eine ganze oder teilweise Ausfüllung mit einer Füllfarbe zur Darstellung einer Flussgeschwindigkeit dient. Ferner kann ein dreidimensionaler beziehungsweise perspektivischer Effekt dargestellt werden, wobei ein Verlauf der Pfeildarstellung in den dargestellten Fahrzeuginnenraum hinein dargestellt wird. Insbesondere wird dadurch ein Luftfluss von einem Belüftungselement in den Fahrzeuginnenraum hinein dargestellt.

Die erfindungsgemäße Bedienvorrichtung gemäß Anspruch 11 der eingangs genannten Art umfasst eine Erfassungseinheit, durch die ein aktueller Wert eines Einstellungsparameters der Klimatisierungsvorrichtung erfassbar ist, und eine Bedienabsichts-Erfassungseinheit, durch die eine Bedienabsicht eines Benutzers erfassbar ist. Dabei ist, wenn keine Bedienabsicht erfasst wird, der Statusmodus aktivierbar und, wenn eine Bedienabsicht erfasst wird, der Übergangsmodus oder der Einstellmodus aktivierbar. Die Bedienvorrichtung umfasst ferner eine Steuereinheit, durch die in Abhängigkeit von dem aktivierten Anzeigemodus Graphikdaten einer grafischen Darstellung eines Innenraums des Fahrzeugs so erzeugbar sind, dass, wenn der Statusmodus aktiviert ist, die Darstellung des Innenraums ein Anzeigeelement umfasst, durch das der aktuell eingestellte Wert des Einstellparameters ausgebbar ist. Ferner umfasst die Darstellung des Innenraums, wenn der Übergangsmodus aktiviert ist, ein Einstellbarkeits-Anzeigeelement sowie, wenn der Einstellmodus aktiviert ist, ein bedienbares Einstellelement. Die Bedienvorrichtung umfasst zudem eine Anzeigeeinheit, durch welche die Graphikdaten anzeigbar sind.

Die erfindungsgemäße Bedienvorrichtung ist insbesondere ausgebildet, das vorstehend beschriebene erfindungsgemäße Verfahren zu implementieren. Die Bedienvorrichtung weist somit dieselben Vorteile auf wie das erfindungsgemäße Verfahren.

Erfindungsgemäß sind bei der Bedienvorrichtung das Anzeigeelement, das Einstellbarkeits-Anzeigeelement und das Einstellelement unterschiedlich voneinander gebildet. Dadurch sind die unterschiedlichen Modi besonders deutlich für einen Nutzer erfassbar.

Gemäß einer Ausbildung ist die Bedienabsicht des Nutzers durch eine von der Bedienvorrichtung umfasste Annäherungserfassungsvorrichtung als Annäherung eines Betätigungsobjekts an die Anzeigefläche durch einen Eintritt des Betätigungsobjekts in einen Detektionsbereich vor der Anzeigefläche erfassbar. Dadurch kann vorteilhafterweise die Bedienabsicht des Nutzers erfasst werden, indem eine räumliche Beziehung zwischen dem Betätigungsobjekt und der angezeigten Darstellung, insbesondere der dargestellten Anzeigeelemente, Einstellbarkeits-Anzeigeelemente und/oder Einstellelemente hergestellt wird. Insbesondere weist die Anzeigeeinheit dabei eine berührungsempfindliche Oberfläche auf. Es kann dadurch insbesondere ein sogenannter Touchscreen bereitgestellt werden. Beispielsweise kann eine Folie über der Anzeigefläche angeordnet sein, mit welcher die Position einer Berührung des Betätigungsobjekts detektiert werden kann, bei dem es sich insbesondere um die Fingerspitze eines Nutzers handelt. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten grafischen Objekt zugeordnet werden, insbesondere einem Anzeigeelement, einem Einstellbarkeits-Anzeigeelement und/oder einem Einstellelement. Des Weiteren kann die Dauer der Berührung bei einer bestimmten Position oder innerhalb eines bestimmten Bereichs erfasst werden.

Gemäß einer weiteren Ausbildung umfasst die Klimatisierungsvorrichtung zumindest ein Belüftungselement, wobei, wenn der Einstellmodus aktiviert ist, anhand des Einstellelements eine Eingabe erfassbar ist und anhand der Eingabe ein Steuersignal für die Klimatisierungsvorrichtung erzeugbar ist. Dabei ist das Belüftungselement der Klimatisierungsvorrichtung anhand des Steuersignals einstellbar.

Dadurch kann vorteilhafterweise eine Einstellung vorgenommen werden, durch die das Belüftungselement als wesentlicher Bestandteil der Klimatisierungsvorrichtung vorgesehen ist.

Die Erfindung wird nun anhand von Ausführungsbeispielen mit Bezug zu den Zeichnungen erläutert.
- Figur 1A: zeigt ein Fahrzeug mit einem Ausführungsbeispiel der erfindungsgemäßen Bedienvorrichtung,
- Figur 1B: zeigt Grafikelemente, wie sie durch das erfindungsgemäße Verfahren angezeigt werden können,
- Figur 2: zeigt ein Beispiel einer mit dem erfindungsgemäßen Verfahren im Anzeigemodus erzeugten Darstellung,
- Figur 3: zeigt ein Beispiel einer mit dem erfindungsgemäßen Verfahren im Übergangsmodus erzeugten Darstellung,
- Figuren 4A, 4B und 4C: zeigen ein Beispiel einer mit dem erfindungsgemäßen Verfahren im Einstellmodus erzeugten Darstellung,
- Figur 5: zeigt ein Beispiel einer der mit dem erfindungsgemäßen Verfahren bei deaktivierter Belüftung im Kopfbereich im Statusmodus erzeugten Darstellung und
- Figur 6: zeigt ein Beispiel einer mit dem erfindungsgemäßen Verfahren bei deaktivierter Belüftung im Kopfbereich im Übergangsmodus erzeugten Darstellung.

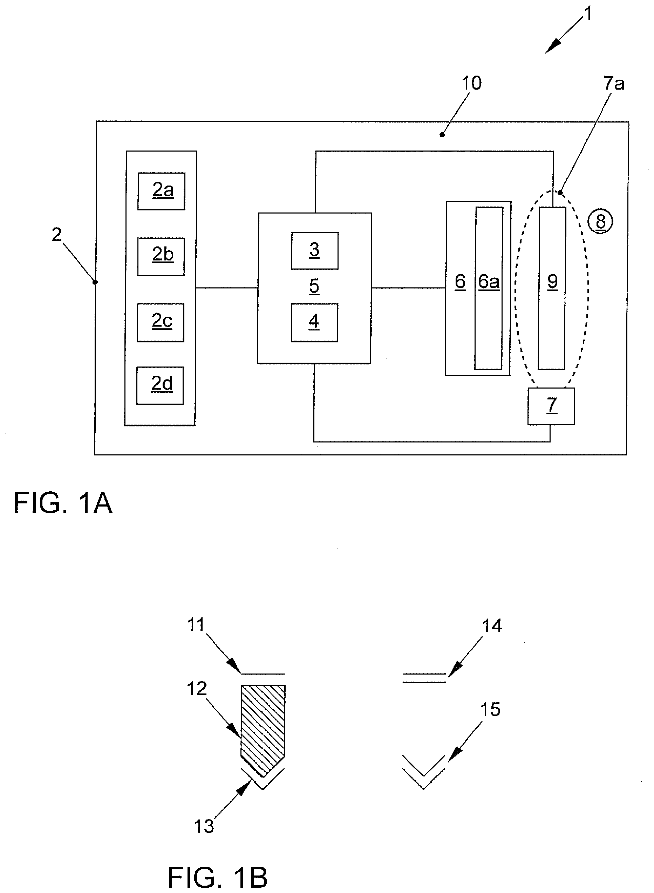

Mit Bezug zu Figur 1A wird ein Fahrzeug mit einem Ausführungsbeispiel der erfindungsgemäßen Bedienvorrichtung erläutert.

Ein Fahrzeug 1 umfasst eine Klimatisierungsvorrichtung 2, die ihrerseits vier Belüftungselemente 2a bis 2d umfasst. Bei dem Ausführungsbeispiel sind die Belüftungselemente 2a bis 2d an verschiedenen Orten in einem Innenraum 10 des Fahrzeugs 1 vorgesehen. In weiteren Ausführungsbeispielen kann eine andere Anzahl von Belüftungselementen 2a bis 2d vorgesehen sein, alternativ oder zusätzlich zu dem Belüftungselementen 2a bis 2d können zudem andere Einrichtungen der Klimatisierungsvorrichtung 2 vorgesehen sein.

Durch die Klimatisierungsvorrichtung 2 kann Luft in den Innenraum 10 geleitet werden. In dem Ausführungsbeispiel ist dazu für jedes der Belüftungselemente 2a bis 2d eine Lüftungsklappe vorgesehen, welche den Einstrom von Luft aus einem Außenraum in der Umgebung des Fahrzeugs 1 in den Innenraum 10 ermöglicht. Die Belüftungselemente sind dabei derart ansteuerbar, dass jeweils ein Luftstrom einer bestimmten Intensität, Richtung und Temperatur eingestellt werden kann. In anderen Ausführungsbeispielen können alternativ oder zusätzlich andere Einstellmöglichkeiten vorgesehen sein.

Das Fahrzeug 1 umfasst ferner eine Steuereinheit 5, die mit der Klimatisierungsvorrichtung 2 gekoppelt ist. Die Steuereinheit 5 umfasst ihrerseits eine Erfassungseinheit 3, durch die Daten von der Klimatisierungsvorrichtung 2 abrufbar sind. Insbesondere sind durch die Erfassungseinheit 3 die jeweils aktuell eingestellten Werte von Einstellungsparametern der Klimatisierungsvorrichtung 2 sowie der Belüftungselemente 2a bis 2d erfassbar. Die Steuereinheit 5 umfasst ferner eine Bedienabsichtserfassungseinheit 4, durch die eine Bedienabsicht eines Benutzers erfassbar ist, wobei Daten von weiteren Einrichtungen ausgewertet werden. Mit der Steuereinheit 5 ist ferner eine Anzeigeeinheit 6 mit einer Anzeigefläche 6a gekoppelt. Vor der Anzeigefläche 6a ist zudem eine berührungsempfindliche Oberfläche 9 angeordnet, die wiederum mit der Steuereinheit 5 gekoppelt ist. Ferner ist eine Annäherungserfassungseinrichtung 7 so in einem Bereich in der Umgebung der Anzeigefläche 6a angeordnet, dass in einem Detektionsbereich 7a vor der Anzeigefläche 6a eine Annäherung erfassbar ist. In dem Fahrzeuginnenraum 10 befindet sich ferner ein Betätigungsobjekt 8, das in dem Ausführungsbeispiel ein Finger eines Benutzers ist.

Durch die Annäherungserfassungseinrichtung 7 kann erfasst werden, wenn das Betätigungsobjekt 8 in den Detektionsbereich 7a eintritt beziehungsweise wenn es sich in diesem befindet. Es ist ferner vorgesehen, dass die Annäherung ortsaufgelöst erfasst wird, das heißt, einer Position des Betätigungsobjekts 8 in dem Detektionsbereich 7a wird eine Annäherungsposition auf der Anzeigefläche 6a zugeordnet. Das heißt, vor dem Berühren der berührungsempfindlichen Oberfläche 9 wird durch die Annäherungserfassungseinrichtung 7 eine Position relativ zur Anzeigefläche 6a bestimmt. Die Annäherungserfassung erfolgt dabei auf an sich bekannte Weise.

Mit Bezug zu Figur 1B werden Grafikelemente erläutert, wie sie durch das erfindungsgemäße Verfahren angezeigt werden können. Dabei werden im weiteren Verlauf der Beschreibung verwendete Bezeichnungen eingeführt.

Als Grundform eines grafischen Elements zur Unterstützung der Bedienung durch einen Benutzer ist ein Pfeil 12 vorgesehen. Dieser weist eine Fläche auf sowie eine Erstreckungsrichtung in Richtung der Pfeilspitze. Die Basis des Pfeils wird durch eine Linie 11 gebildet. Dabei kann die Linie 11 an beliebiger Position relativ zur Erstreckungsrichtung des Pfeils 12 angezeigt werden. Ferner ist eine Spitze 13 vorgesehen, deren Form der Pfeilspitze des Pfeils 12 folgt, und die hier parallel dazu am Ende des Pfeils 12 dargestellt ist. Ferner können zwei parallele, einander angenäherte Linien 14 sowie zwei parallele aneinander angenäherte Spitzen 15 dargestellt werden.

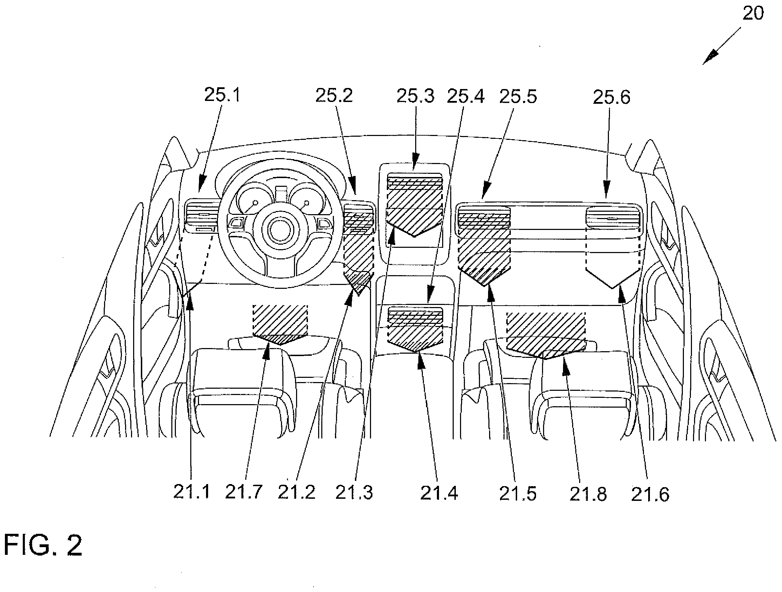

Mit Bezug zu Figur 2 wird ein Beispiel einer mit dem erfindungsgemäßen Verfahren im Anzeigemodus erzeugten Darstellung erläutert. Es wird dabei von dem oben mit Bezug zu Figur 1A beschriebenen System und den mit Bezug zu Figur 1B beschriebenen grafischen Elementen ausgegangen.

Eine Darstellung 10 wird durch die Steuereinheit 5 erzeugt und durch die Anzeigeeinheit 6 auf der Anzeigefläche 6a angezeigt. Es wird eine Ansicht des Innenraums 10 des Fahrzeugs 1 dargestellt, wobei in perspektivischer Weise ein Blick von hinten in den vorderen Bereich des Fahrzeuges, insbesondere auf das Armaturenbrett mit einer Vielzahl von Ausströmerelementen 25.1 bis 25.6, dargestellt wird. In dem Ausführungsbeispiel ist vorgesehen, dass jedem der in der Darstellung 20 gezeigten Ausströmerelemente 25.1 bis 25.6 ein Belüftungselement 2a bis 2d der Klimatisierungsvorrichtung 2 zugeordnet ist.

Durch die Erfassungseinheit 3 werden die aktuell eingestellten Parameter der Belüftungselemente 2a bis 2d erfasst, wobei insbesondere erfasst wird, ob die den Belüftungselementen 2a bis 2d zugeordneten Lüftungsklappen geöffnet oder geschlossen sind, sowie welche Temperatur und Intensität eines Luftstroms durch die Belüftungselemente 2a bis 2d in den Innenraum 10 des Fahrzeugs 1 geleitet wird.

Da bei dem in Figur 2 gezeigten Fall keine Bedienabsicht eines Benutzers erfasst wird, ist der Statusmodus als Anzeigemodus der Klimatisierungsvorrichtung aktiviert.

An den Ausströmerelementen 25.1 bis 25.6 der Darstellung 20 sind Anzeigeelemente 21.1 bis 21.8 angeordnet. Die Anzeigeelemente 21.1 bis 21.8 weisen die Form eines Pfeils 12, wie oben mit Bezug zu Figur 1B erläutert, auf. Sie können sich unterscheiden in Länge, Breite und farblicher Gestaltung. In Figur 2 ist mittels einer vorhandenen beziehungsweise fehlenden Schraffur angedeutet, dass einzelne Anzeigeelemente 21.1, 21.6 keine Füllfarbe aufweisen. Die restlichen Anzeigeelemente 21.1 bis 21.8 weisen eine Füllfarbe auf. Dabei ist bei dem Ausführungsbeispiel vorgesehen, dass die Farbe in Abhängigkeit von der Temperatur des einströmenden Luftstroms abhängig ist. Ferner können die Umrisse der Pfeile ebenfalls in der gleichen Farbe gestaltet sein.

In weiteren Ausführungsbeispielen können andere Darstellungsformen vorgesehen sein, insbesondere können andere Mittel der Hervorhebung und Charakterisierung der Anzeigeelemente 21.1 bis 21.8 verwendet werden, um verschiedene Ausprägungen und Einstellungen der zugeordneten Belüftungselemente 2a bis 2d darzustellen.

Bei dem in Figur 2 gezeigten Fall strömt durch die seitlich äußeren Belüftungselemente, die hier durch die Ausströmerelemente 25.1, 25.6 dargestellt sind, keine Luft in den Innenraum 10 des Fahrzeugs 1. Dies wird dargestellt, indem auf die Füllfarbe der zugeordneten Anzeigeelemente 21.1, 21.6 verzichtet wird. Ferner kann vorgesehen sein, dass beispielsweise eine neutrale Farbe als Füllfarbe verwendet wird. Ferner können weitere Effekte, wie beispielsweise Effekte einer Spiegelung auf einer Teilfläche dargestellt werden.

In dem dargestellten Ausführungsbeispiel ist vorgesehen, dass die Pfeile der Anzeigeelemente 21.1 bis 21.8 perspektivisch dargestellt werden, sodass ein Eindruck von durch die Pfeile ausgezeichneten Bewegungsrichtungen entsteht, die dem Einströmen von Luft durch die Ausströmerelemente 25.1 bis 25.6 entsprechen.

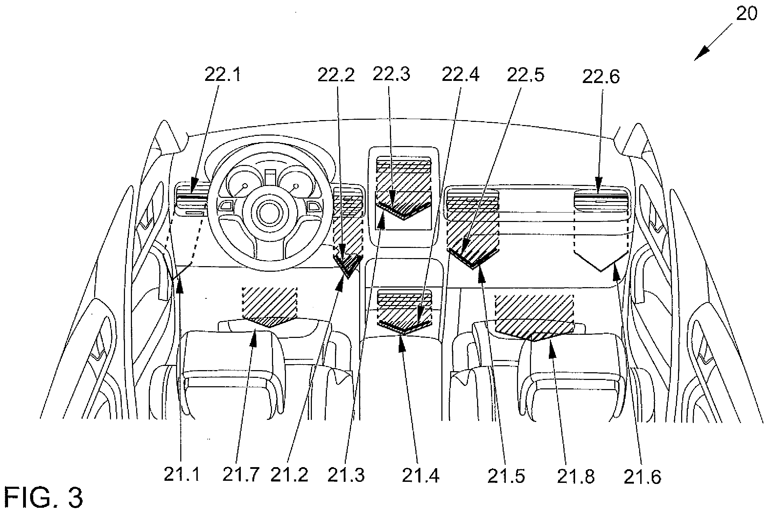

Mit Bezug zu Figur 3 wird ein Beispiel einer mit dem erfindungsgemäßen Verfahren im Übergangsmodus erzeugten Darstellung erläutert. Dabei wird von dem oben mit Bezug zu den Figuren 1A und 1B sowie Figur 2 beschriebenen Bedienvorrichtung ausgegangen.

Bei dem in Figur 3 gezeigten Fall wurde durch die Annäherungserfassungseinrichtung 7 detektiert, dass das Betätigungsobjekt 8 in den Detektionsbereich 7a eingetreten ist. Es wird daher der Übergangsmodus als Anzeigemodus der Klimatisierungsvorrichtung 2 aktiviert.

Die Darstellung 20 wird zunächst in ähnlicher Weise gebildet, wie zuvor für Figur 2 im Fall des Statusmodus erläutert. Ergänzend werden nun Einstellbarkeits-Anzeigeelemente 22.1 bis 22.6 dargestellt. Diese können als Spitzen oder Linien ausgebildet sein, etwa wie die Spitze 13 und die Linie 11 in Figur 1B. Die Einstellbarkeits-Anzeigeelemente 22.1 bis 22.6 werden an den Anzeigeelementen 21.1 bis 21.6 angeordnet dargestellt. Zwei der in Figur 3 gezeigten Anzeigeelemente 21.7, 21.8 werden nicht durch solche Einstellbarkeits-Anzeigeelemente ergänzt, da hier keine Einstellungen vorgenommen werden können.

Die Einstellbarkeits-Anzeigeelemente 22.1 bis 22.6 werden in den Fällen als Spitzen gebildet (22.2 bis 22.5), in denen ein Luftstrom einströmt. Sie werden zudem als Linie dargestellt, wenn die Lüftungsklappe des zugeordneten Belüftungselement 2a bis 2d geschlossen ist und daher keine Luft einströmen kann. In dem Ausführungsbeispiel sind die Einstellbarkeits-Anzeigeelemente 22.1 bis 22.6 entlang der Längserstreckung der Anzeigeelemente 21.1 bis 21.6 so angeordnet, dass eine Spitze dargestellt wird (22.2 bis 22.5), wenn ein Luftstrom erzeugt wird, wobei die Spitze an der Pfeilspitze des Anzeigeelements 21.2 bis 21.5 angeordnet ist und die Pfeilspitze entweder überdeckend oder parallel zu dieser angeordnet ist. Ferner wird das Einstellbarkeits-Anzeigeelement 22.1, 22.6 als Linie an der Basis des Pfeils des Anzeigeelements 21.1., 21.6 dargestellt, wenn die Lüftungsklappe geschlossen ist. Der Pfeil des Anzeigeelements 21.1, 21.6 ist in diesem Fall transparent beziehungsweise weist eine andere Farbe auf.

Beim Übergang von dem Status- zum Übergangsmodus können die Einstellbarkeits-Anzeigeelemente 22.1 bis 22.6 zusätzlich zu den Anzeigeelementen 21.1 bis 21.8 erscheinen. Alternativ oder zusätzlich kann ein Übergang zwischen den Darstellungen ausgegeben werden, bei dem beispielsweise die Anzeigeelemente 21.1 bis 21.8 verschwinden und die Einstellbarkeits-Anzeigeelemente 22.1 bis 22.6 erscheinen. Die Darstellung im Übergangsmodus kann auch so gebildet sein, dass sie keine Anzeigeelemente 21.1 bis 21.8 mehr umfasst, sondern nur noch die Einstellbarkeits-Anzeigeelemente 22.1 bis 22.6.

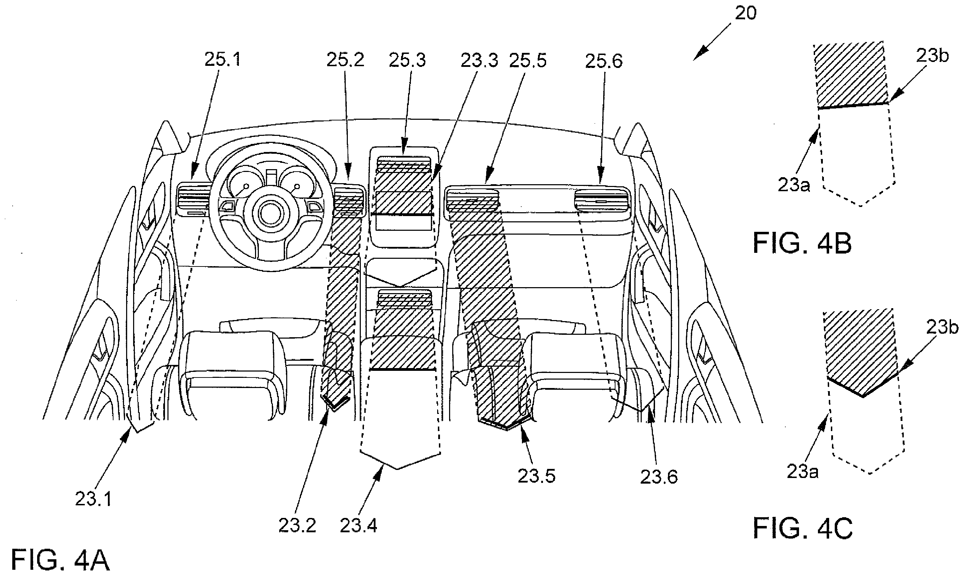

Mit Bezug zu den Figuren 4A, 4B und 4C wird ein Beispiel einer mit dem erfindungsgemäßen Verfahren im Einstellmodus erzeugten Darstellung erläutert. Dabei wird von dem oben mit Bezug zu den Figuren 1A und 1B sowie Figur 2 beschriebenen Bedienvorrichtung ausgegangen.

Bei dem in Figur 4A gezeigten Fall wurde eine Betätigung durch das Betätigungsobjekt 8 erfasst. In dem Ausführungsbeispiel ist dies eine Berührung der berührungsempfindlichen Oberfläche 9 durch einen Finger des Benutzers. Es wird daher der Einstellmodus als Anzeigemodus der Klimatisierungsvorrichtung 2 aktiviert. Die Darstellung 20 verändert sich, indem die von den Ausströmerelementen 20.1 bis 20.6 ausgehenden Pfeile mittels einer Animation vergrößert werden, sodass der Eindruck entsteht, dass sie in die Darstellung 20 des Fahrzeuginnenraums hineinwachsen. Dabei wird eine Transformation der Einstellbarkeits-Anzeigeelemente 22.1 bis 22.6 zu Einstellelementen 23.1 bis 23.6 erreicht.

In weiteren Ausführungsbeispielen kann die Betätigung auf andere Weise erfasst werden, etwa wenn der Abstand des Betätigungsobjektes 8 einen bestimmten Abstand von der berührungsempfindlichen Oberfläche 9 unterschreitet. Ferner können andere Bedienhandlungen als Betätigung erfasst werden, etwa eine bestimmte Geste, ein Sprachbefehl oder ein Halten des Betätigungsobjekts 8 über einer bestimmten Position der berührungsempfindlichen Oberfläche 9 länger als eine bestimmte Zeit.

Die Gestaltung der Einstellelemente 23.1 bis 23.6 wird mit Bezug zu den Figuren 4B und 4C genauer erläutert.

Vorgesehen ist eine Pfeilform, wobei die Fläche des Pfeils ganz oder teilweise von einer Füllfarbe belegt sein kann, beziehungsweise keine Füllfarbe aufweisen kann. Die Pfeilform weist eine Längserstreckung auf und ein Zeigerobjekt 23b ist so entlang der Längserstreckung der Pfeilform angeordnet, dass die Pfeilform selbst als Skalenobjekt 23a eine quantitative Ausgabe des durch das Einstellelement 23.1 bis 23.6 dargestellten Wertes eines Einstellparameters erlaubt.

Bei dem in Figur 4C dargestellten Fall ist dabei vorgesehen, dass der Benutzer mit dem Betätigungsobjekt 8 sich in einer bestimmten näheren Umgebung des dargestellten Einstellelements 23.1 bis 23.6 befindet. Das Zeigerobjekt 23b verändert sich von der Darstellung einer Linie in Figur 4B zur Darstellung einer Spitze in Figur 4C. Dadurch wird dargestellt, dass eine Bedienung des Einstellelements 23.1 bis 23.6 nun vorgenommen werden kann, da das Zeigerelement 23b nunmehr von einer reinen Anzeigefunktion zu einer Einstellfunktion gewechselt ist.

In weiteren Ausführungsbeispielen kann eine andere Veränderung der Darstellung beim Annähern des Betätigungsobjekts 8 vorgesehen sein, beispielsweise eine farbliche Änderung des Einstellelements 23.1. bis 23.8, ein dynamischer Effekt einer zeitlich veränderlichen Darstellung und/oder eine anderweitige Darstellungsänderung bezüglich des Einstellelements 23.1 bis 23.6, wodurch eine Veränderung gegenüber den anderen Einstellelementen 23.1 bis 23.6 erreicht wird.

Bei dem in Figur 4A dargestellten Fall ist vorgesehen, dass die außen seitlichen Einstellelemente 23.1, 23.6 einen Zustand der zugeordneten Belüftungselemente 2a bis 2d repräsentieren, bei dem die Lüftungsklappen geschlossen sind. Die Pfeilformen werden transparent dargestellt, und das Skalenelement 23b wird in der Form einer Linie an der Basis der Pfeilform des Einstellelements 23.1, 23.6 dargestellt.

Bei den weiteren Einstellelementen 23.2 bis 23.5 ist vorgesehen, dass ein Luftstrom in den Innenraum 10 des Fahrzeugs 1 fließt, das heißt, bei der dazugehörigen Darstellung der Einstellelemente 23.2 bis 23.5 wird die Pfeilform ganz oder teilweise von einer Füllfarbe bedeckt. Bei den beiden mittleren Ausströmerelementen 25.3, 25.4 sind jeweils Einstellelemente 23.3, 23.4 angeordnet, bei denen angezeigt wird, dass der einströmende Luftstrom seine volle Intensität noch nicht erreicht hat. Die Fläche der Pfeilform ist nur teilweise von einer Füllfarbe ausgefüllt, während die restliche Fläche transparent dargestellt ist. Den Übergang zwischen ausgefüllter und nicht ausgefüllter Fläche bezeichnet das Zeigerelement 23b, das hier als Linie ausgebildet ist.

Ferner ist hier das Zeigerelement 23b so dargestellt, dass sich aus der Anordnung relativ zur Längserstreckung der Pfeilform die Intensität der einströmenden Luft ergibt. Bei den Einstellelementen 23.2, 23.5, bei denen ein einströmender Luftstrom mit voller Intensität dargestellt ist, wird die gesamte Pfeilform von der Füllfarbe ausgefüllt und das Zeigerelement 23b ist als Spitze ausgebildet und an der Pfeilspitze des Einstellelements 23.2, 23.5 dargestellt. Dabei kann vorgesehen sein, dass das Zeigerelement 23b die Spitze der Pfeilform überdeckt oder parallel zu dieser dargestellt ist.

In weiteren Ausführungsbeispielen kann vorgesehen sein, dass die Position der Annäherung des Betätigungsobjekts 8 nicht ortsaufgelöst detektiert werden kann, das heißt, es ist in diesem Fall nicht vorgesehen, dass sich nur ein bestimmtes Einstellelement 23.1 bis 23.6 verändert, um die Möglichkeit einer Einstellung anzuzeigen, während die weiteren Einstellbarkeits-Anzeigeelemente 22.1 bis 22.6 und/oder Anzeigeelemente 21.1 bis 21.8 unverändert bleiben.

Es ist vorgesehen, dass ein Benutzer nun mittels des Betätigungsobjekts 8 eine Einstellung vornehmen kann, indem er eine Wischgeste von einer Position eines Zeigerelements 23b entlang der Längserstreckung eines Pfeilform eines Einstellelements 23.1 bis 23.6 durchführt. Der Endpunkt der Wischgeste ist dabei die neue Position des Zeigerelements 23b entlang der Längserstreckung des Einstellelements 23.1 bis 23.6. Ferner kann vorgesehen sein, dass die Einstellung mittels eines Antippens des Einstellelements bei einer bestimmten Position erfolgt, wobei in diesem Fall die Position des Tippens wie die Endposition der Wischgeste behandelt wird und daher die neue Position des Zeigerelements 23b darstellt.

Ferner kann vorgesehen sein, wenn eine Lüftungsklappe geschlossen ist, dass durch Tippen auf das Zeigerobjekt 23b, welches als Linie an der Basis des Einstellelements 23.1, 23.6 dargestellt ist, die Lüftungsklappe geöffnet werden kann.

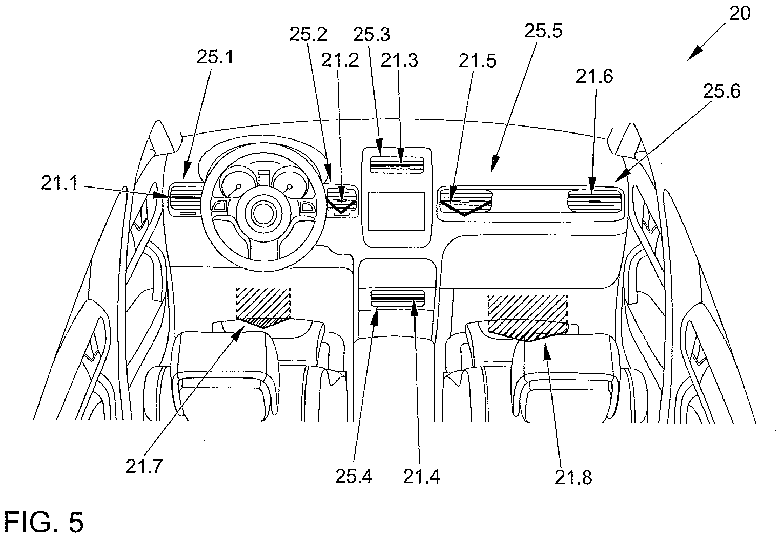

Mit Bezug zu Figur 5 wird ein Beispiel einer der mit dem erfindungsgemäßen Verfahren im Statusmodus erzeugten Darstellung bei deaktivierter Belüftung im Kopfbereich erläutert. Dabei wird von dem oben mit Bezug zu den Figuren 1A und 1B sowie Figur 2 beschriebenen Bedienvorrichtung ausgegangen.

Bei dem in Figur 5 dargestellten Fall ist vorgesehen, dass der Statusmodus der Klimatisierungsvorrichtung 2 aktiviert ist. Dabei wurde die Klimatisierungsvorrichtung 2 so konfiguriert, dass die Kopfbelüftung, die hier anhand der Ausströmerelemente 25.1 bis 25.6 dargestellt ist, deaktiviert wurde, während gleichzeitig nicht dargestellte Ausströmer im Fußbereich aktiviert sind. Zu Aktivieren und Deaktivieren der Belüftung im Kopf- oder Fußbereich sowie in weiteren Bereichen des Fahrzeuginnenraums können insbesondere Nutzereingaben erfasst werden, etwa mittels Schaltflächen der Darstellung und/oder analogen Schaltern oder weiteren Eingabevorrichtungen.

Diese Einstellungen werden so dargestellt, dass die im Fußbereich dargestellten Anzeigeelemente 21.7, 21.8 als Pfeilformen ausgebildet sind, während die den Ausströmerelementen 25.1 bis 25.6 zugeordneten Anzeigeelemente 21.1 bis 21.6 lediglich als Linien oder Spitzen dargestellt werden, vergleichbar den in Figur 1B dargestellten Spitzen 13 und Linien 11. Dabei wird eine Linie dann angezeigt, wenn die zugeordnete Lüftungsklappe geschlossen ist, und es wird eine Spitze angezeigt, wenn die Lüftungsklappe geöffnet ist.

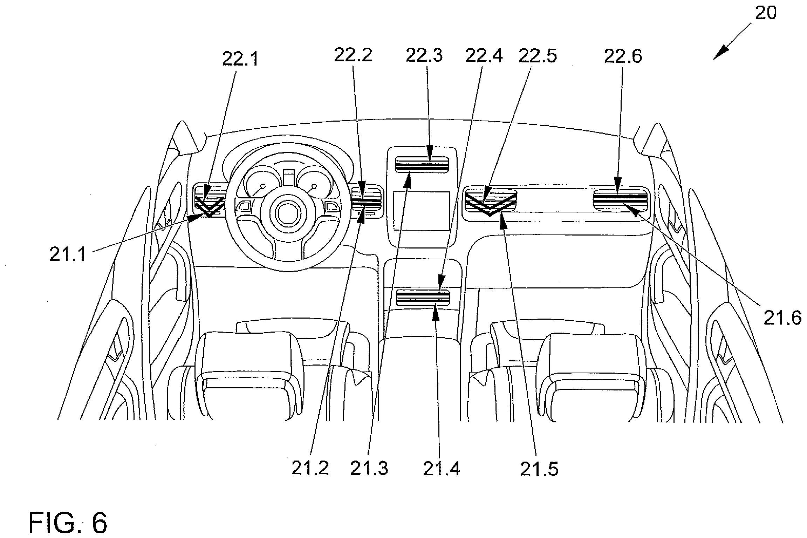

Mit Bezug zu Figur 6 wird ein Beispiel einer mit dem erfindungsgemäßen Verfahren bei deaktivierter Belüftung im Kopfbereich im Übergangsmodus erzeugten Darstellung erläutert. Dabei wird von dem oben mit Bezug zu den Figuren 1A und 1B sowie Figur 2 beschriebenen Bedienvorrichtung ausgegangen.

Bei dem in Figur 6 dargestellten Fall wird davon ausgegangen, dass das Betätigungsobjekt 8 in den Detektionsbereich 7a eingetreten ist und daher eine Annäherung detektiert wurde. Als Anzeigemodus der Klimatisierungsvorrichtung 2 wurde daher der Übergangsmodus aktiviert.

In diesem Ausführungsbeispiel ist vorgesehen, dass die oben in Figur 5 dargestellten Anzeigeelemente 21.7, 21.8 im Fußraum nicht mehr angezeigt werden, da diese nicht bedienbar sind. Es werden die bereits oben erläuterten, auf Linien und Spitzen reduzierten Anzeigeelemente 21.1 bis 21.6 angezeigt, und dazu angenähert Linien und Spitzen als Einstellbarkeits-Anzeigeelemente 22.1 bis 22.6 dargestellt.

In einem weiteren Ausführungsbeispiel ist vorgesehen, dass die Anzeige beim Übergang zum Einstellungsmodus im Wesentlichen gleich bleibt, wobei die parallel dargestellten Linien und Pfeile der Anzeigeelemente 21.1 bis 21.6 und Einstellbarkeits-Anzeigeelemente 22.1 bis 22.6 als angenäherte Linien und angenäherte Pfeile als Einstellelemente 23.1 bis 23.6 dienen. Durch Tippen kann ein Öffnen oder Schließen der zugeordneten Lüftungsklappen vorgenommen werden.

In einem weiteren Ausführungsbeispiel kann eine ortsaufgelöste Annäherungserfassung vorgesehen sein, durch die erfassbar ist, an welchen Bereich oder welche Position der Anzeigefläche 6a sich das Betätigungsobjekt 8 annähert. In diesem Bereich beziehungsweise in einem definierten Bereich um diese Position kann dann der Übergangsmodus aktiviert werden, während für andere Bereiche der Anzeigefläche 6a der Statusmodus aktiviert ist. Das heißt, in dem Bereich werden die Einstellbarkeits-Anzeigeelemente 22.1 bis 22.6 angezeigt, während sie in den restlichen Bereichen der Anzeigefläche 6a nicht angezeigt werden. Insbesondere kann in diesem Fall auch erfasst werden, wenn das Betätigungsobjekt 8 sich über die Anzeigefläche 6a bewegt und der Bereich, in dem der Übergangsmodus aktiviert ist, kann der Position des Betätigungsobjekts 8 entsprechend verschoben werden. Dadurch kann ein Nutzer die Bedienmöglichkeiten in bestimmten Bereichen suchen, während die weiteren Bereiche unverändert bleiben.

In analoger Weise kann der Einstellmodus für einen bestimmten Bereich der Anzeigefläche 6a aktiviert werden, insbesondere wenn die Erfassung der Betätigung ortsaufgelöst mit einem Bezug zu einer bestimmten Position der Anzeigefläche 6a erfolgt.

### Bezugszeichenliste

- 1: Fahrzeug
- 2: Klimatisierungsvorrichtung
- 2a; 2b; 2c; 2d: Belüftungselement
- 3: Erfassungseinheit
- 4: Bedienabsichts-Erfassungseinheit
- 5: Steuereinheit
- 6: Anzeigeeinheit
- 6a: Anzeigefläche
- 7: Annäherungserfassungseinrichtung
- 7a: Detektionsbereich
- 8: Betätigungsobjekt
- 10: Innenraum
- 11: Linie
- 12: Pfeil
- 13: Spitze
- 14: Angenäherte Linie
- 15: Angenäherte Spitze
- 20: Grafische Darstellung
- 21.1; 21.1; 21.3; 21.4; 21.5; 21.6; 21.7; 21.8: Anzeigeelement
- 22.1; 22.2; 22.3; 22.4; 22.5; 22.6: Einstellbarkeits-Anzeigeelement
- 23.1; 23.2; 23.3; 23.4; 23.5; 23.6: Einstellelement
- 23a: Skalenobjekt
- 23b: Zeigerobjekt
- 25.1; 25.2; 25.3; 25.4; 25.5; 25.6: Ausströmerelemente

## Patentansprüche

1. Verfahren zum Bedienen einer Klimatisierungsvorrichtung (2) eines Fahrzeugs (1); wobei die Klimatisierungsvorrichtung (2) zumindest drei Anzeigemodi aufweist, nämlich einen Statusmodus, einen Übergangsmodus und einen Einstellmodus; wobei bei dem Verfahren:
ein aktueller Wert eines Einstellungsparameters der Klimatisierungsvorrichtung (2) erfasst wird;
erfasst wird, ob eine Bedienabsicht eines Benutzers besteht;
wenn keine Bedienabsicht erfasst wird, der Statusmodus aktiviert wird;
wenn eine Bedienabsicht erfasst wird, der Übergangsmodus oder der Einstellmodus aktiviert wird; und
in Abhängigkeit von dem aktivierten Anzeigemodus Graphikdaten einer grafischen Darstellung (20) eines Innenraums (10) des Fahrzeugs (1) so erzeugt und angezeigt werden, dass,
wenn der Statusmodus aktiviert ist, die Darstellung (20) des Innenraums (10) ein Anzeigeelement (21.1; 21.2; 21.3; 21.4; 21.5; 21.6; 21.7; 21.8) umfasst, durch das der aktuell eingestellte Wert des Einstellparameters ausgegeben wird,
wenn der Übergangsmodus aktiviert ist, die Darstellung (20) des Innenraums (10) ein Einstellbarkeits-Anzeigeelement (22.1; 22.2; 22.3; 22.4; 22.5; 22.6) umfasst, und,
wenn der Einstellmodus aktiviert ist, die Darstellung (20) des Innenraums (10) ein bedienbares Einstellelement (23.1; 23.2; 23.3; 23.4; 23.5; 23.6) umfasst, wobei
die Darstellung (20) des Innenraums (10), wenn der Statusmodus aktiviert ist, lediglich das Anzeigeelement (21.1; 21.2; 21.3; 21.4; 21.5; 21.6; 21.7; 21.8) und weder das Einstellbarkeits-Anzeigeelement (22.1; 22.2; 22.3; 22.4; 22.5; 22.6) noch das bedienbare Einstellelement (23.1; 23.2; 23.3; 23.4; 23.5; 23.6) umfasst,
**dadurch gekennzeichnet, dass,**
das Anzeigeelement (21.1; 21.2; 21.3; 21.4; 21.5; 21.6; 21.7; 21.8), das Einstellbarkeits-Anzeigeelement (22.1; 22.2; 22.3; 22.4; 22.5; 22.6) und das Einstellelement (23.1; 23.2; 23.3; 23.4; 23.5; 23.6) unterschiedlich voneinander ausgebildet sind, wobei
das Einstellelement (23.1; 23.2; 23.3; 23.4; 23.5; 23.6) ein Skalenobjekt (23a) und ein Zeigerobjekt (23b) umfasst, wobei zum Bedienen des Einstellelements eine Verschiebung des Zeigerobjekts (23b) relativ zu einer Erstreckungsrichtung des Skalenobjekts (23a) erfasst wird.

2. Verfahren gemäß Anspruch 1,
**dadurch gekennzeichnet, dass**
wenn der Einstellmodus aktiviert ist, anhand des Einstellelements (23.1; 23.2; 23.3; 23.4; 23.5; 23.6) eine Eingabe erfasst wird und anhand der Eingabe ein Steuersignal für die Klimatisierungsvorrichtung (2) erzeugt wird, wobei
anhand des Steuersignals ein Belüftungselement (2a; 2b; 2c; 2d) der Klimatisierungsvorrichtung (2) eingestellt wird.

3. Verfahren gemäß Anspruch 2,
**dadurch gekennzeichnet, dass**
anhand des Steuersignals ein geöffneter Zustand und ein geschlossener Zustand des Belüftungselements (2a; 2b; 2c; 2d) eingestellt wird.

4. Verfahren gemäß Anspruch 3,
**dadurch gekennzeichnet, dass,**
wenn der Statusmodus aktiviert ist, das Anzeigeelement (21.1; 21.1; 21.3; 21.4; 21.5; 21.6; 21.7; 21.8) so gebildet wird, dass der geöffnete oder geschlossene Zustand des Belüftungselements (2a; 2b; 2c; 2d) ausgegeben wird.

5. Verfahren gemäß einem der Ansprüche 2 bis 4,
**dadurch gekennzeichnet, dass**
das Anzeigeelement (21.1; 21.1; 21.3; 21.4; 21.5; 21.6; 21.7; 21.8), das Einstellelement (23.1; 23.2; 23.3; 23.4; 23.5; 23.6) und das Einstellbarkeits-Anzeigeelement (22.1; 22.2; 22.3; 22.4; 22.5; 22.6) jeweils an einer Position der Darstellung (20) angeordnet sind, welche der tatsächlichen Position des Belüftungselements (2a; 2b; 2c; 2d) in dem Fahrzeug (1) entspricht.

6. Verfahren gemäß einem der vorhergehenden Ansprüche,
**dadurch gekennzeichnet, dass**
der Wert des Einstellparameters durch das Anzeigeelement (21.1; 21.1; 21.3; 21.4; 21.5; 21.6; 21.7; 21.8) anhand einer Farbe und/oder einer Längserstreckung ausgegeben wird.

7. Verfahren gemäß einem der vorhergehenden Ansprüche,
**dadurch gekennzeichnet, dass**
der Übergangsmodus aktiviert wird, wenn die erfasste Bedienabsicht eine Annäherung eines Betätigungsobjekts (8) innerhalb eines Detektionsraums (7a) umfasst.

8. Verfahren gemäß einem der vorhergehenden Ansprüche,
**dadurch gekennzeichnet, dass,**
wenn der Übergangsmodus aktiviert ist, das Einstellbarkeits-Anzeigeelement (22.1; 22.2; 22.3; 22.4; 22.5; 22.6) zusammen mit dem Anzeigeelement (21.1; 21.1; 21.3; 21.4; 21.5; 21.6; 21.7; 21.8) dargestellt wird, wobei das Einstellbarkeits-Anzeigeelement (22.1; 22.2; 22.3; 22.4; 22.5; 22.6) an dem Anzeigeelement (21.1; 21.1; 21.3; 21.4; 21.5; 21.6; 21.7; 21.8) angeordnet ist.

9. Verfahren gemäß einem der vorhergehenden Ansprüche,
**dadurch gekennzeichnet, dass**
der Einstellmodus aktiviert wird, wenn die Bedienabsicht eine Betätigungshandlung umfasst.

10. Verfahren gemäß einem der vorhergehenden Ansprüche,
**dadurch gekennzeichnet, dass,**
wenn der Einstellmodus aktiviert ist, eine Annäherungsposition eines Betätigungsobjekts (8) relativ zu der Darstellung (20) des Innenraums (10) bestimmt wird und das bedienbare Einstellelement (23.1; 23.2; 23.3; 23.4; 23.5; 23.6) anhand der Annäherungsposition gebildet wird.

11. Bedienvorrichtung zum Bedienen einer Klimatisierungsvorrichtung (2) eines Fahrzeugs (1); wobei die Klimatisierungsvorrichtung (2) zumindest drei Anzeigemodi aufweist, nämlich einen Statusmodus, einen Übergangsmodus und einen Einstellmodus, wobei die Bedienvorrichtung umfasst:
eine Erfassungseinheit (3), durch die ein aktueller Wert eines Einstellungsparameters der Klimatisierungsvorrichtung (2) erfassbar ist;
eine Bedienabsichts-Erfassungseinheit (4), durch die eine Bedienabsicht eines Benutzers erfassbar ist, wobei,
wenn keine Bedienabsicht erfasst wird, der Statusmodus aktivierbar ist und, wenn eine Bedienabsicht erfasst wird, der Übergangsmodus oder der Einstellmodus aktivierbar ist;
eine Steuereinheit (5), durch die in Abhängigkeit von dem aktivierten Anzeigemodus Graphikdaten einer grafischen Darstellung (20) eines Innenraums (10) des Fahrzeugs (1) so erzeugbar sind, dass,
wenn der Statusmodus aktiviert ist, die Darstellung (20) des Innenraums (10) ein Anzeigeelement (21.1; 21.2; 21.3; 21.4; 21.5; 21.6; 21.7; 21.8) umfasst, durch das der aktuell eingestellte Wert des Einstellparameters ausgebbar ist,
wenn der Übergangsmodus aktiviert ist, die Darstellung (20) des Innenraums (10) ein Einstellbarkeits-Anzeigeelement (22.1; 22.2; 22.3; 22.4; 22.5; 22.6) umfasst, und,
wenn der Einstellmodus aktiviert ist, die Darstellung (20) des Innenraums (10) ein bedienbares Einstellelement (23.1; 23.2; 23.3; 23.4; 23.5; 23.6) umfasst; und
eine Anzeigeeinheit (6), durch welche die Graphikdaten anzeigbar sind, wobei
die Darstellung (20) des Innenraums (10), wenn der Statusmodus aktiviert ist, lediglich das Anzeigeelement (21.1; 21.2; 21.3; 21.4; 21.5; 21.6; 21.7; 21.8) und weder das Einstellbarkeits-Anzeigeelement (22.1; 22.2; 22.3; 22.4; 22.5; 22.6) noch das bedienbare Einstellelement (23.1; 23.2; 23.3; 23.4; 23.5; 23.6) umfasst,
**dadurch gekennzeichnet, dass,**
das Anzeigeelement (21.1; 21.2; 21.3; 21.4; 21.5; 21.6; 21.7; 21.8), das Einstellbarkeits-Anzeigeelement (22.1; 22.2; 22.3; 22.4; 22.5; 22.6) und das Einstellelement (23.1; 23.2; 23.3; 23.4; 23.5; 23.6) unterschiedlich voneinander ausgebildet sind, wobei
das Einstellelement (23.1; 23.2; 23.3; 23.4; 23.5; 23.6) ein Skalenobjekt (23a) und ein Zeigerobjekt (23b) umfasst, wobei zum Bedienen des Einstellelements eine Verschiebung des Zeigerobjekts (23b) relativ zu einer Erstreckungsrichtung des Skalenobjekts (23a) erfassbar ist.

12. Bedienvorrichtung gemäß Anspruch 11,
**dadurch gekennzeichnet, dass**
die Bedienabsicht des Nutzers durch eine von der Bedienvorrichtung umfasste Annäherungserfassungsvorrichtung (7) als Annäherung eines Betätigungsobjekts (8) an die Anzeigefläche (6a) durch einen Eintritt des Betätigungsobjekts (8) in einen Detektionsbereich (7a) vor der Anzeigefläche (4a) erfassbar ist.

13. Bedienvorrichtung gemäß Anspruch 11 oder 12,
**dadurch gekennzeichnet, dass**
die Klimatisierungsvorrichtung (2) zumindest ein Belüftungselement (2a; 2b; 2c; 2d) umfasst, wobei,
wenn der Einstellmodus aktiviert ist, anhand des Einstellelements (23.1; 23.2; 23.3; 23.4; 23.5; 23.6) eine Eingabe erfassbar ist und anhand der Eingabe ein Steuersignal für die Klimatisierungsvorrichtung (2) erzeugbar ist, wobei
das Belüftungselement (2a; 2b; 2c; 2d) der Klimatisierungsvorrichtung (2) anhand des Steuersignals einstellbar ist.

## Claims

1. Method for operating an air-conditioning device (2) of a vehicle (1); wherein the air-conditioning device (2) has at least three display modes, namely a status mode, a transition mode and a setting mode; wherein in the method:
a current value of a setting parameter of the air-conditioning device (2) is detected;
the fact of whether there is an operating intention of a user is detected;
if no operating intention is detected, the status mode is activated;
if an operating intention is detected, the transition mode or the setting mode is activated; and
depending on the activated display mode, graphical data of a graphical representation (20) of an interior (10) of the vehicle (1) are generated and displayed such that
if the status mode is activated, the representation (20) of the interior (10) comprises a display element (21.1; 21.2; 21.3; 21.4; 21.5; 21.6; 21.7; 21.8) which outputs the currently set value of the setting parameter,
if the transition mode is activated, the representation (20) of the interior (10) comprises a settability display element (22.1; 22.2; 22.3; 22.4; 22.5; 22.6), and
if the setting mode is activated, the representation (20) of the interior (10) comprises an operable setting element (23.1; 23.2; 23.3; 23.4; 23.5; 23.6), wherein
if the status mode is activated, the representation (20) of the interior (10) comprises only the display element (21.1; 21.2; 21.3; 21.4; 21.5; 21.6; 21.7; 21.8) and neither the settability display element (22.1; 22.2; 22.3; 22.4; 22.5; 22.6) nor the operable setting element (23.1; 23.2; 23.3; 23.4; 23.5; 23.6),
**characterized in that**
the display element (21.1; 21.2; 21.3; 21.4; 21.5; 21.6; 21.7; 21.8), the settability display element (22.1; 22.2; 22.3; 22.4; 22.5; 22.6) and the setting element (23.1; 23.2; 23.3; 23.4; 23.5; 23.6) are embodied differently from one another, wherein the setting element (23.1; 23.2; 23.3; 23.4; 23.5;
23.6) comprises a scale object (23a) and a pointer object (23b), wherein a displacement of the pointer object (23b) relative to a direction of extent of the scale object (23a) is detected for operating the setting element.

2. Method according to Claim 1,
**characterized in that**
if the setting mode is activated, an input is detected on the basis of the setting element (23.1; 23.2; 23.3; 23.4; 23.5; 23.6) and a control signal for the air-conditioning device (2) is generated on the basis of the input, wherein
a ventilation element (2a; 2b; 2c; 2d) of the air-conditioning device (2) is set on the basis of the control signal.

3. Method according to Claim 2,
**characterized in that**
an open state and a closed state of the ventilation element (2a; 2b; 2c; 2d) are set on the basis of the control signal.

4. Method according to Claim 3,
**characterized in that**
if the status mode is activated, the display element (21.1; 21.2; 21.3; 21.4; 21.5; 21.6; 21.7; 21.8) is formed such that the open or closed state of the ventilation element (2a; 2b; 2c; 2d) is output.

5. Method according to any of Claims 2 to 4,
**characterized in that**
the display element (21.1; 21.2; 21.3; 21.4; 21.5; 21.6; 21.7; 21.8), the setting element (23.1; 23.2; 23.3; 23.4; 23.5; 23.6) and the settability display element (22.1; 22.2; 22.3; 22.4; 22.5; 22.6) are arranged in each case at a position of the representation (20) which corresponds to the actual position of the ventilation element (2a; 2b; 2c; 2d) in the vehicle (1).

6. Method according to any of the preceding claims,
**characterized in that**
the value of the setting parameter is output by the display element (21.1; 21.2; 21.3; 21.4; 21.5; 21.6; 21.7; 21.8) on the basis of a colour and/or a longitudinal extent.

7. Method according to any of the preceding claims,
**characterized in that**
the transition mode is activated if the detected operating intention comprises an approach of an activation object (8) within a detection space (7a) .

8. Method according to any of the preceding claims,
**characterized in that**
if the transition mode is activated, the settability display element (22.1; 22.2; 22.3; 22.4; 22.5; 22.6) is represented together with the display element (21.1; 21.2; 21.3; 21.4; 21.5; 21.6; 21.7; 21.8), wherein the settability display element (22.1; 22.2; 22.3; 22.4; 22.5; 22.6) is arranged on the display element (21.1; 21.2; 21.3; 21.4; 21.5; 21.6; 21.7; 21.8) .

9. Method according to any of the preceding claims,
**characterized in that**
the setting mode is activated if the operating intention comprises an actuation action.

10. Method according to any of the preceding claims,
**characterized in that**
if the setting mode is activated, an approach position of an activation object (8) relative to the representation (20) of the interior (10) is determined and the operable setting element (23.1; 23.2; 23.3; 23.4; 23.5; 23.6) is formed on the basis of the approach position.

11. Operating device for operating an air-conditioning device (2) of a vehicle (1); wherein the air-conditioning device (2) has at least three display modes, namely a status mode, a transition mode and a setting mode, wherein the operating device comprises:
a detection unit (3), by which a current value of a setting parameter of the air-conditioning device (2) is detectable;
an operating intention detection unit (4), by which an operating intention of a user is detectable, wherein
if no operating intention is detected, the status mode is activatable, and if an operating intention is detected, the transition mode or the setting mode is activatable;
a control unit (5), by which, depending on the activated display mode, graphical data of a graphical representation (20) of an interior (10) of the vehicle (1) are generatable such that if the status mode is activated, the representation (20) of the interior (10) comprises a display element (21.1; 21.2; 21.3; 21.4; 21.5; 21.6; 21.7; 21.8) which is able to output the currently set value of the setting parameter,
if the transition mode is activated, the representation (20) of the interior (10) comprises a settability display element (22.1; 22.2; 22.3; 22.4; 22.5; 22.6), and
if the setting mode is activated, the representation (20) of the interior (10) comprises an operable setting element (23.1; 23.2; 23.3; 23.4; 23.5; 23.6); and
a display unit (6), which is able to display the graphical data, wherein
if the status mode is activated, the representation (20) of the interior (10) comprises only the display element (21.1; 21.2; 21.3; 21.4; 21.5; 21.6; 21.7; 21.8) and neither the settability display element (22.1; 22.2; 22.3; 22.4; 22.5; 22.6) nor the operable setting element (23.1; 23.2; 23.3; 23.4; 23.5; 23.6),
**characterized in that**
the display element (21.1; 21.2; 21.3; 21.4; 21.5; 21.6; 21.7; 21.8), the settability display element (22.1; 22.2; 22.3; 22.4; 22.5; 22.6) and the setting element (23.1; 23.2; 23.3; 23.4; 23.5; 23.6) are embodied differently from one another, wherein
the setting element (23.1; 23.2; 23.3; 23.4; 23.5; 23.6) comprises a scale object (23a) and a pointer object (23b), wherein a displacement of the pointer object (23b) relative to a direction of extent of the scale object (23a) is detectable for operating the setting element.

12. Operating device according to Claim 11,
**characterized in that**
the operating intention of the user is detectable by an approach detection device (7), which the operating device comprises, as approach of an activation object (8) to the display area (6a) as a result of an entrance of the activation object (8) into a detection region (7a) in front of the display area (4a).

13. Operating device according to Claim 11 or 12,
**characterized in that**
the air-conditioning device (2) comprises at least one ventilation element (2a; 2b; 2c; 2d), wherein if the setting mode is activated, an input is detectable on the basis of the setting element (23.1; 23.2; 23.3; 23.4; 23.5; 23.6) and a control signal for the air-conditioning device (2) is generatable on the basis of the input, wherein the ventilation element (2a; 2b; 2c; 2d) of the air-conditioning device (2) is settable on the basis of the control signal.

## Revendications

1. Procédé de commande d'un dispositif de climatisation (2) d'un véhicule (1) ; dans lequel le dispositif de climatisation (2) comporte au moins trois modes d'affichage, à savoir un mode d'état, un mode de transition et un mode de réglage ; dans lequel, conformément au procédé :
une valeur actuelle d'un paramètre de réglage du dispositif de climatisation (2) est détectée ;
il est détecté si un utilisateur a l'intention de commander le climatiseur ;
lorsqu'aucune intention de commande n'est détectée, le mode d'état est activé ;
lorsqu'une intention de commande est détectée, le mode de transition ou le mode de réglage est activé ; et
selon le mode d'affichage activé, des données graphiques d'une représentation graphique (20) d'un habitacle (10) du véhicule (1) sont générées et affichées de telle manière que,
lorsque le mode d'état est activé, la représentation (20) de l'habitacle (10) comprend un élément d'affichage (21.1 ; 21.2 ; 21.3 ; 21.4 ; 21.5 ; 21.6 ; 21.7 ; 21.8) par l'intermédiaire duquel la valeur actuellement réglée du paramètre de réglage est fournie,
lorsque le mode de transition est activé, la représentation (20) de l'habitacle (10) comprend un élément d'affichage de possibilité de réglage (22.1 ; 22.2 ; 22.3 ; 22.4 ; 22.5 ; 22.6), et
lorsque le mode de réglage est activé, la représentation (20) de l'habitacle (10) comprend un élément de réglage commandable (23.1 ; 23.2 ; 23.3 ; 23.4 ; 23.5 ; 23.6), dans lequel
la représentation (20) de l'habitacle (10), lorsque le mode d'état est activé, comprend uniquement l'élément d'affichage (21.1 ; 21.2 ; 21.3 ; 21.4 ; 21.5 ; 21.6 ; 21.7 ; 21.8) et ni l'élément d'affichage de possibilité de réglage (22.1 ; 22.2 ; 22.3 ; 22.4 ; 22.5 ; 22.6) ni l'élément de réglage commandable (23.1 ; 23.2 ; 23.3 ; 23.4 ; 23.5 ; 23.6),
**caractérisé en ce que**
l'élément d'affichage (21.1 ; 21.2 ; 21.3 ; 21.4 ; 21.5 ; 21.6 ; 21.7 ; 21.8), l'élément d'affichage de possibilité de réglage (22.1 ; 22.2 ; 22.3 ; 22.4 ; 22.5 ; 22.6) et l'élément de réglage (23.1 ; 23.2 ; 23.3 ; 23.4 ; 23.5 ; 23.6) sont réalisés différemment les uns des autres, dans lequel
l'élément de réglage (23.1 ; 23.2 ; 23.3 ; 23.4 ; 23.5 ; 23.6) comprend un objet échelle (23a) et un objet pointeur (23b), dans lequel un déplacement de l'objet pointeur (23b) par rapport à une direction d'extension de l'objet échelle (23a) est détecté pour commander l'élément de réglage.

2. Procédé selon la revendication 1,
**caractérisé en ce que**,
lorsque le mode de réglage est activé, une entrée est détectée au moyen de l'élément de réglage (23.1 ; 23.2 ; 23.3 ; 23.4 ; 23.5 ; 23.6) et un signal de commande destiné au dispositif de climatisation (2) est généré au moyen de l'entrée, dans lequel
un élément de ventilation (2a ; 2b ; 2c ; 2d) du dispositif de climatisation (2) est réglé au moyen du signal de commande.

3. Procédé selon la revendication 2,
**caractérisé en ce qu'**un état ouvert et un état fermé de l'élément de ventilation (2a ; 2b ; 2c ; 2d) est réglé au moyen du signal de commande.

4. Procédé selon la revendication 3,
**caractérisé en ce que**,
lorsque le mode d'état est activé, l'élément d'affichage (21.1 ; 21.1 ; 21.3 ; 21.4 ; 21.5 ; 21.6 ; 21.7 ; 21.8) est formé de telle manière que l'état ouvert ou fermé de l'élément de ventilation (2a ; 2b ; 2c ; 2d) est fourni.

5. Procédé selon l'une des revendications 2 à 4, **caractérisé en ce que**
l'élément d'affichage (21.1 ; 21.1 ; 21.3 ; 21.4 ; 21.5 ; 21.6 ; 21.7 ; 21.8), l'élément de réglage (23.1 ; 23.2 ; 23.3 ; 23.4 ; 23.5 ; 23.6) et l'élément d'affichage de possibilité de réglage (22.1 ; 22.2 ; 22.3 ; 22.4 ; 22.5 ; 22.6) sont respectivement disposés à une position de la représentation (20) qui correspond à la position réelle de l'élément de ventilation (2a ; 2b ; 2c ; 2d) dans le véhicule (1).

6. Procédé selon l'une des revendications précédentes, **caractérisé en ce que**
la valeur du paramètre de réglage est fournie par l'élément d'affichage (21.1 ; 21.1 ; 21.3 ; 21.4 ; 21.5 ; 21.6 ; 21.7 ; 21.8) au moyen d'une couleur et/ou d'une extension longitudinale.

7. Procédé selon l'une des revendications précédentes, **caractérisé en ce que**
le mode de transition est activé lorsque l'intention de commande détectée comprend un rapprochement d'un objet de commande (8) à l'intérieur d'un espace de détection (7a) .

8. Procédé selon l'une des revendications précédentes, **caractérisé en ce que**,
lorsque le mode de transition est activé, l'élément d'affichage de possibilité de réglage (22.1 ; 22.2 ; 22.3 ; 22.4 ; 22.5 ; 22.6) est affiché en même temps que l'élément d'affichage (21.1 ; 21.1 ; 21.3 ; 21.4 ; 21.5 ; 21.6 ; 21.7 ; 21.8),
dans lequel l'élément d'affichage de possibilité de réglage (22.1 ; 22.2 ; 22.3 ; 22.4 ; 22.5 ; 22.6) est disposé au niveau de l'élément d'affichage (21.1 ; 21.1 ; 21.3 ; 21.4 ; 21.5 ; 21.6 ; 21.7 ; 21.8).

9. Procédé selon l'une des revendications précédentes, **caractérisé en ce que** le mode de réglage est activé lorsque l'intention de commande comprend une manipulation d'actionnement.

10. Procédé selon l'une des revendications précédentes, **caractérisé en ce que**,
lorsque le mode de réglage est activé, une position de rapprochement d'un objet de commande (8) par rapport à la représentation (20) de l'habitacle (10) est déterminée et l'élément de réglage commandable (23.1 ; 23.2 ; 23.3 ; 23.4 ; 23.5 ; 23.6) est formé au moyen de la position de rapprochement.

11. Dispositif de commande permettant de commander un dispositif de climatisation (2) d'un véhicule (1) ; dans lequel le dispositif de climatisation (2) comporte au moins trois modes d'affichage, à savoir un mode d'état, un mode de transition et un mode de réglage, dans lequel le dispositif de commande comprend :
une unité de détection (3) permettant de détecter la valeur actuelle d'un paramètre de réglage du dispositif de climatisation (2) ;
une unité de détection d'intention de commande (4) permettant de détecter une intention de commande d'un utilisateur, dans lequel,
lorsqu'aucune intention de commande n'est détectée, le mode d'état peut être activé et, lorsqu'une intention de commande est détectée, le mode de transition ou le mode de réglage peut être activé ;
une unité de commande (5) au moyen de laquelle, selon le mode d'affichage activé, des données graphiques d'une représentation graphique (20) d'un habitacle (10) du véhicule (1) peuvent être générées, de telle manière que, lorsque le mode d'état est activé, la représentation (20) de l'habitacle (10) comprend un élément d'affichage (21.1 ; 21.2 ; 21.3 ; 21.4 ; 21.5 ; 21.6 ; 21.7 ; 21.8) par l'intermédiaire duquel la valeur actuellement réglée du paramètre de réglage peut être fournie,
lorsque le mode de transition est activé, la représentation (20) de l'habitacle (10) comprend un élément d'affichage de possibilité de réglage (22.1 ; 22.2 ; 22.3 ; 22.4 ; 22.5 ; 22.6), et
lorsque le mode de réglage est activé, la représentation (20) de l'habitacle (10) comprend un élément de réglage commandable (23.1 ; 23.2 ; 23.3 ; 23.4 ; 23.5 ; 23.6) une unité d'affichage (6) permettant d'afficher les données graphiques, dans lequel
la représentation (20) de l'habitacle (10), lorsque le mode d'état est activé, comprend uniquement l'élément d'affichage (21.1 ; 21.2 ; 21.3 ; 21.4 ; 21.5 ; 21.6 ; 21.7 ; 21.8) et ni l'élément d'affichage de possibilité de réglage (22.1 ; 22.2 ; 22.3 ; 22.4 ; 22.5 ; 22.6) ni l'élément de réglage commandable (23.1 ; 23.2 ; 23.3 ; 23.4 ; 23.5 ; 23.6)
**caractérisé en ce que**
l'élément d'affichage (21.1 ; 21.2 ; 21.3 ; 21.4 ; 21.5 ; 21.6 ; 21.7 ; 21.8), l'élément d'affichage de possibilité de réglage (22.1 ; 22.2 ; 22.3 ; 22.4 ; 22.5 ; 22.6) et l'élément de réglage (23.1 ; 23.2 ; 23.3 ; 23.4 ; 23.5 ; 23.6) sont réalisés différemment les uns des autres, dans lequel
l'élément de réglage (23.1 ; 23.2 ; 23.3 ; 23.4 ; 23.5 ; 23.6) comprend un objet échelle (23a) et un objet pointeur (23b), dans lequel un déplacement de l'objet pointeur (23b) par rapport à une direction d'extension de l'objet échelle (23a) peut être détecté pour commander l'élément de réglage.

12. Dispositif de commande selon la revendication 11, **caractérisé en ce que**
l'intention de commande de l'utilisateur peut être détectée par un dispositif de détection de proximité (7) compris dans le dispositif de commande en tant que rapprochement d'un objet d'actionnement (8) de la surface d'affichage (6a) par la pénétration de l'objet d'actionnement (8) dans une zone de détection (7a) à l'avant la surface d'affichage (4a).

13. Dispositif de commande selon la revendication 11 ou 12,
**caractérisé en ce que**
le dispositif de climatisation (2) comprend au moins un élément de ventilation (2a ; 2b ; 2c ; 2d), dans lequel, lorsque le mode de réglage est activé, une entrée peut être détectée au moyen de l'élément de réglage (23.1 ; 23.2 ; 23.3 ; 23.4 ; 23.5 ; 23.6) et un signal de commande destiné au dispositif de climatisation (2) peut être généré au moyen de l'entrée, dans lequel l'élément de ventilation (2a ; 2b ; 2c ; 2d) du dispositif de climatisation (2) peut être réglé au moyen du signal de commande.
